# EUROPEAN PATENT APPLICATION

(11) **EP 4 442 884 A1**
(43) Date of publication of application: **09.10.2024**
(21) Application number: 22900567.3
(22) Date of filing: 30.11.2022
(51) Int. Cl.: D06F 25/00, D06F 58/00

(54) **CLOTHING TREATMENT DEVICE**

(30) Priority: 30.11.2021 CN 202111450553; 31.08.2022 WO PCT/CN2022/116387
(71) Applicant: Shenzhen Roborock Innovation Technology Co., Ltd., Shenzhen, Guangdong 518000 (CN)
(72) Inventor: LI, Xing, Shenzhen, Guangdong 518000 (CN); DUAN, Chuanlin, Shenzhen, Guangdong 518000 (CN); YAN, Yadong, Shenzhen, Guangdong 518000 (CN); YANG, Zhimin, Shenzhen, Guangdong 518000 (CN); QUAN, Gang, Shenzhen, Guangdong 518000 (CN)
(74) Representative: Cabinet Beau de Loménie
(86) International application number: PCT/CN2022/135667
(87) International publication number: WO 2023/098763

(57) **Abstract**

A clothing treatment device, comprising: at least two containers (A) that are arranged in parallel, the containers (A) being used for containing clothing; and a drying apparatus (B) which is alternatively communicated with the containers (A) to form a circulation path, the drying apparatus (B) being used for dehumidifying moist airflow from the containers (A) so that the moist airflow becomes dry airflow and the dry airflow enters the containers (A) to dry the clothing. The drying apparatus alternatively dehumidifies the clothing in the containers, and a plurality of containers share the drying apparatus, such that the structure can be simplified, the overall height or width of the clothing treatment device is reduced, and the size and costs of the whole device are reduced; and moreover, the drying apparatus is compactly integrated in the clothing treatment device having a standard size, dehumidification and drying can be continuously and efficiently achieved by means of efficient circulation/dehumidification/regeneration functions, and power saving and time saving are achieved.

## Description

### CROSS-REFERENCE TO RELATED APPLICATION

The present application is proposed based on and claims priority of the Chinese Patent Application No. 202111450553.3 filed on November 30, 2021, and the International Patent Application No. PCT/CN2022/116387 filed on August 31, 2022, the contents of which are incorporated herein by reference in their entireties.

### TECHNICAL FIELD

The present application relates to the field of household appliances, in particular to a laundry treatment apparatus.

### BACKGROUND ART

With the improvement of people's living standards, lifestyles are also constantly changing, and for consumer goods, people are no longer satisfied with their basic functions. For example, for different family members, people put forward different washing and drying requirements on washing machines, and twin-tub washing machines come into being. For example, an upper layer washing region of the twin-tub washing machine may be used for washing and drying children's laundry, ladies' underwear and laundry of special materials, which can play a better care role in the washing process, and a lower layer washing region is mainly used for washing and drying daily worn ordinary adult laundry.

However, for the existing twin-tub washing machines, independent washing systems and drying systems are used respectively in the upper layer washing region and the lower layer washing region, such that the washing machine is too high in height, too large in volume, inconvenient for user operations and high in cost.

### SUMMARY OF THE INVENTION

An objective of the present application is to provide a laundry treatment apparatus, in which laundry in containers is humidified alternatively through a drying device, and a plurality of containers share the drying device, so that the structure can be simplified, the overall height or width of the laundry treatment apparatus is reduced, and the volume and cost of the whole apparatus are reduced. Various functions of washing regions, drying and regeneration circulation are achieved with high integration, and the whole operation process is efficient, time-saving and electricity-saving, thus greatly saving working time and energy consumption.

The present application provides a laundry treatment apparatus. The laundry treatment apparatus includes: at least two containers arranged in parallel, where a container is used for accommodating laundry; and a drying device, alternatively communicated with the container to form a circulation path, where the drying device is used for dehumidifying a humid airflow from the containers into a dry airflow, and the dry airflow enters the container to dry the laundry.

Furthermore, the drying device is arranged above or below at least one container, and a plane where the drying device is located is parallel to a rotation axis of the container.

Furthermore, the drying device includes: a circulation module, communicated with the container and used for providing power for circulation flowing of the humid airflow in the container; a dehumidification module, located downstream or upstream of the circulation module and communicated with the container, where the dehumidification module is used for adsorbing moisture from the humid airflow in the container and outputting the dry airflow into the container; and a regeneration module, communicated with the dehumidification module and used for outputting a dry regenerated airflow to the dehumidification module to desorb the moisture from at least part of the dehumidification module to restore a dehumidification capability of the dehumidification module; where the circulation module, the dehumidification module and the regeneration module of the drying device are substantially within a plane.

Furthermore, the drying device further includes: an air inlet channel, communicated with the circulation module and the container, and used for a humid circulation airflow from the container to enter the circulation module; and an air outlet channel, arranged to communicate the dehumidification module with the container, and used as a channel for a dry circulation airflow after moisture desorption to enter the container.

Furthermore, each of the containers includes an air inlet passage and an air outlet passage; each air inlet passage is communicated with the air outlet channel, so that the dry circulation airflow after moisture desorption enters the container; and each air outlet passage is communicated with the air inlet channel, so that the humid circulation airflow in the container enters the circulation module.

Furthermore, the laundry treatment apparatus further includes: a switching mechanism used for controlling the drying device to be communicated with any one of the containers, where the switching mechanism is arranged on a pipeline of the drying device communicated with the container.

Furthermore, the switching mechanism includes a first switching mechanism and a second switching mechanism, where the first switching mechanism is used for controlling connection or disconnection between each air inlet passage and the air outlet channel; the first switching mechanism is arranged at a joint between each air inlet passage and the air outlet channel; or, a number of the first switching mechanism is more than one, and more than one first switching mechanism is respectively arranged within the air inlet passage of the container; the second switching mechanism is used for controlling connection or disconnection between each air outlet passage and the air inlet channel; the second switching mechanism is arranged at a joint between each air outlet passage and the air inlet channel; or a number of the second switching mechanism is more than one, and more than one second switching mechanism is respectively arranged within the air outlet passages of the container.

Furthermore, the drying device further includes: a condensation module communicated with a regenerated air outlet of the regeneration module and used for condensing the regenerated airflow outputted by the regeneration module to form a low-temperature dry airflow; where, an air outlet of the condensation module is communicated with a regenerated air inlet of the regeneration module.

Furthermore, the drying device is provided with a packaging housing, and the packaging housing includes: a first housing, including a first turntable housing for housing the dehumidification module, a first circulation housing for housing the circulation module, a first condensation housing for housing the condensation module, and a regeneration housing for housing the regeneration module; and an upper housing, including a second turntable housing for housing the dehumidification module, a second circulation housing for housing the circulation module and a second condensation housing for housing the condensation module; where the first turntable housing, the first circulation housing and the first condensation housing are at least integrally formed as the first housing, or separately formed as a plurality of discrete first housing components; and the second turntable housing, the second circulation housing and the second condensation housing are at least respectively formed as a plurality of discrete second housing components.

Furthermore, the laundry treatment apparatus further includes a frame, where the containers are located within the frame and flexibly connected with the frame; where the drying device is located on top of the frame; at least one mounting part is arranged on the first housing; and the mounting part is connected to the top of the frame to fix a position of the drying device.

Furthermore, the air inlet passage is arranged on a sidewall of the container, and the air inlet passage is close to a front right side or a front left side of the container; the air inlet passage extends upward and is flexibly connected to the air outlet channel; the air outlet passage is arranged on a back wall of the container, and the air outlet passage is close to a left side or a right side of the container; and the air outlet passage extends upward and is flexibly connected to the air inlet channel.

Preferably, rotation axes of at least two of the circulation module, the dehumidification module and the regeneration module in the drying device are parallel to each other and substantially perpendicular to the rotation axis of the container.

Preferably, a rotation axis of the circulation module and a rotation axis of the dehumidification module are arranged to be in different planes from and perpendicular to a rotation axis of the container and distributed on either side of the rotation axis of the container.

Preferably, the regeneration module is arranged on a side of the circulation module; the regeneration module and the dehumidification module are respectively located on either side of the rotation axis of the container.

Optionally, the drying device further includes an air inlet channel, which communicates the circulation module with the container and is used as a channel for the humid circulation airflow from the container to enter the circulation module.

Optionally, when a plane where the drying device is located is horizontally arranged above the container, the air inlet channel is arranged on a rear left side or a rear right side of the container, and the circulation module communicated with the air inlet channel is also correspondingly arranged at the upper part of the rear left side or the rear right side of the container.

Optionally, the drying device further includes an air outlet channel, which is arranged to communicate the circulation module with the container and used as a channel for the dehumidified dry circulation airflow to enter the container.

Optionally, when a plane where the drying device is located is horizontally arranged below the container, the air inlet channel is arranged to extend along a bottom part, a back part and an upper part of the laundry treatment apparatus in sequence, and communicate an air outlet of the container with an air inlet of a circulation fan.

Preferably, when a plane where the drying device is located is horizontally arranged below the container, the air outlet channel is arranged to extend along a bottom part, a back part and an upper part of the laundry treatment apparatus, and communicate an air outlet of the dehumidification module with an air inlet of the container.

Optionally, a plane where the drying device is located is arranged perpendicularly behind the container, and is perpendicular to a rotation axis of the container.

Preferably, a rotating shaft of the circulation module and a rotating shaft of the dehumidification module are parallel to a rotating shaft of the container and distributed on either side of the rotating shaft of the container; and the regeneration module is arranged on a side of the circulation module; the regeneration module and the dehumidification module are respectively located on either side of the rotating shaft of the container.

Optionally, the drying device further includes an air inlet channel, which is arranged to extend in a direction perpendicular to the rotating shaft of the container, communicate an air outlet of the container with an air inlet of the circulation module, and be used as a channel for the humid circulation airflow from the container to enter the circulation module.

Optionally, the drying device further includes an air outlet channel, which is arranged to extend in a direction parallel to the rotating shaft of the container, communicate the air outlet of the dehumidification module with an air inlet of the container, and be used as a channel for the dry circulation airflow after dehumidification to enter the container.

Optionally, the regenerated air inlet and the regenerated air outlet of the regeneration module are both communicated with atmosphere.

Optionally, the drying device further includes a condensation module, communicated with the regenerated air outlet of the regeneration module and used for condensing a regenerated airflow outputted by the regeneration module into a low-temperature dry airflow.

Optionally, the air outlet of the condensation module is communicated with the atmosphere or the regenerated air inlet of the regeneration module.

Optionally, the drying device further includes a filtering assembly, arranged in the air inlet channel of the circulation module and used for filtering flying fluffs and/or impurities in the airflow from the container.

Optionally, the air inlet channel is arranged to pass through a front end of the laundry treatment apparatus, and the filtering assembly arranged in the air inlet channel is detachably arranged on a front end panel of the laundry treatment apparatus.

Optionally, a housing of the drying device is integrally provided with at least one mounting part at each of the positions corresponding to four frame edges of the laundry treatment apparatus, and the drying device is rigidly fixed on a box body of the laundry treatment apparatus through the mounting part.

Preferably, flexible connection is adopted between the housing of the drying device and the container of the laundry treatment apparatus.

Optionally, flexible connection is adopted in at least one of joints between the following assemblies: between the circulation module and the air inlet channel of the drying device, and/or between the air inlet channel and the container, and/or between the dehumidification module and the circulation module, and/or between the dehumidification module and the air outlet channel of the drying device, and/or between the air outlet channel and the container.

Optionally, the first turntable housing is fixedly and rigidly connected onto a washing machine frame, and other various lower housings are formed in a separate or integrated manner and fixedly and rigidly connected to an outer container tub.

Preferably, flexible connection is adopted between the first turntable housing and all assemblies that generate vibrations.

Furthermore, the laundry treatment apparatus further includes: a filtering assembly, including a filter arranged on an air outlet passage of the container or within the air inlet channel of the drying device; and a filter self-cleaning device, used for cleaning the filter.

Furthermore, the filter and the filter self-cleaning device are arranged within the air inlet channel of the drying device, and are located between the second switching mechanism and the circulation module.

Furthermore, a number of the filter and a number of the filter self-cleaning device are more than one; more than one filter and more than one filter self-cleaning device are respectively arranged on the air outlet passage of the container and located upstream or downstream of the second switching mechanism.

Furthermore, the filter self-cleaning device includes a spraying mechanism for spraying on the filter; and/or the filter self-cleaning device includes a vibration mechanism for driving the filter to vibrate; and/or the filter self-cleaning device includes a blowing mechanism for blowing the filter; and/or the filter self-cleaning device includes a scraping mechanism for scraping the filter.

Furthermore, a direction of a fluid of the spraying mechanism flowing through the filter is opposite to a direction of an airflow flowing through the filter; or, the filter and the filter self-cleaning device are arranged within the air inlet channel (102) of the drying device and located between the second switching mechanism and the circulation module; the filter self-cleaning device includes a spraying mechanism for spraying on the filter, and a fluid spraying direction of the spraying mechanism is a direction away from the circulation module.

Furthermore, a nozzle of the spraying mechanism is arranged above a center line of the filter; or the nozzle of the spraying mechanism is arranged on a side of an airflow outlet of the filter.

Furthermore, the container includes a first tub and a second tub, and the first tub and the second tub are both inner tubs of a washing machine; or, the first tub is an inner tub of a dryer and the second tub is an inner tub of a washing machine; or the first tub is an inner tub of a washing machine and the second tub is an inner tub of a dryer.

Furthermore, the drying device is located between the first tub and the second tub.

The drying device according to the present application is compactly integrated in a standard-sized laundry treatment apparatus, and can continuously and efficiently realize dehumidification and drying by closely matching circulating dehumidification and regeneration functions without increasing an overall size of the laundry treatment apparatus, thus saving electricity and time.

In the laundry treatment apparatus according to the embodiments of the present application, a plurality of containers shares a same drying device, so that the structure can be simplified, the overall height or width of the laundry treatment apparatus is reduced, and the volume and cost of the apparatus are reduced. The filter is used to prevent foreign matters such as flying fluffs from entering the drying device and affecting the dehumidification effect. The filter self-cleaning device can automatically clean the filters to ensure that a filtering function of the filter does not decrease with the extension of use time, thus providing strong protection for the drying device and prolonging the service life of the drying device.

### BRIEF DESCRIPTION OF THE DRAWINGS

To describe the technical solutions in the embodiments of the present application or in traditional technologies more clearly, the accompanying drawings required to be used in the embodiments are briefly introduced below. Apparently, the accompanying drawings in the following descriptions show merely some embodiments of the present application, and those of ordinary skill in the art may still obtain other drawings from these accompanying drawings without creative efforts.
Fig. 1 is a schematic diagram of an overall structure of a drying device of a laundry treatment apparatus of the present application; where, Fig. 1a is a top view of an assembling structure of the drying device, Fig. 1b is an exploded structural diagram of assemblies of the drying device, and Fig. 1c is a mounting position diagram of the drying device in the laundry treatment apparatus.
Fig. 2 is a position structural diagram of the drying device of the laundry treatment apparatus of the present application.
Fig. 3 is a position schematic diagram of an air inlet channel of the drying device.
Fig. 4 is a position structural diagram of a drying device according to another embodiment of a laundry treatment apparatus of the present application.
Fig. 5 is a position structural diagram of a drying device according to yet another embodiment of a laundry treatment apparatus of the present application.
Fig. 6 is a structural diagram of a lower housing of a packaging housing of a drying device according to an embodiment of the present application.
Fig. 7 is a schematic structural diagram of an upper housing of a dehumidification module according to an embodiment of the present application.
Fig. 8 is a connection structure between a drying device and a frame of a washing machine of the present application.
Fig. 9 is a connection structure between a drying device and a container of a washing machine of the present application.
Fig. 10 is a schematic structural diagram of a regeneration module of a laundry treatment apparatus of the present application, where Fig. 10a is an assembling structural diagram of the regeneration module, and Fig. 10b is an exploded structural diagram of the regeneration module.
Fig. 11 is a schematic diagram of a closed-loop regeneration circulation structure of a regeneration module of a laundry treatment apparatus of the present application.
Fig. 12 shows a schematic structural diagram of a regenerated air inlet connector according to an embodiment of the present application, where Fig. 12a shows a schematic diagram of a connection structure of the regenerated air inlet connector, and Fig. 12b shows a schematic diagram of an internal structure of the regenerated air inlet connector.
Fig. 13 shows a schematic structural diagram of an air outlet connector of a regeneration fan according to an embodiment of the present application, where Fig. 13a shows a schematic diagram of a connection structure of the air outlet connector of the regeneration fan, and Fig. 13b shows a schematic diagram of an internal structure of the air outlet connector of the regeneration fan.
Fig. 14 is a schematic diagram of an upper housing assembly of a circulation module of a drying device of the present application.
Fig. 15 is a schematic diagram of a lower housing assembly of a circulation module of a drying device of the present application.
Fig. 16 is a schematic diagram of a dehumidification circulation process of a circulation module according to an embodiment of the present application.
Fig. 17 is a schematic diagram of a water supply module of a laundry treatment apparatus of the present application.
Fig. 18 is a schematic connection diagram of an air inlet channel of a drying device of a washing machine of the present application.
Fig. 19 is a schematic structural diagram of a filtering assembly of the present application.
Fig. 20 is a schematic structural diagram of a nozzle of a filtering assembly of the present application.
Fig. 21 shows a schematic position diagram of a nozzle of a filtering assembly of the present application.
Fig. 22 shows a schematic position diagram of a condensation nozzle of a filtering assembly of the present application.
Fig. 23 shows a schematic structural diagram of a dehumidification module of the present application.
Fig. 24 shows an exploded structural diagram of a sealing package of a dehumidification module.
Fig. 25 is a schematic structural diagram of a lower housing of a dehumidification module of the present application.
Fig. 26 shows a schematic structural diagram of a second turntable housing for dehumidification of the present application.
Fig. 27 shows a schematic diagram of an internal structure of a dehumidification turntable of a drying device of the present application, where Fig. 27a is an exploded schematic structural diagram of the dehumidification turntable, and Fig. 27b is a schematic diagram of an assembling structure of the dehumidification turntable.
Fig. 28 shows a schematic structural diagram of a sealing ring arranged in a first turntable housing.
Fig. 29 shows a schematic diagram of a damping structure of a dehumidification turntable.
Fig. 30 shows a schematic structural diagram of a peripheral driving device of a dehumidification turntable according to an embodiment of the present application.
Fig. 31 shows a schematic structural diagram of a flexible roller of a dehumidification module according to an embodiment of the present application.
Fig. 32 shows a schematic structural diagram of an auxiliary roller of a dehumidification module according to an embodiment of the present application.
Fig. 33 shows a schematic diagram of a sealing structure of a heating module of a drying device of the present application.
Fig. 34 shows a schematic structural diagram of a mesh plate of a heating module of a drying device of the present application, where Fig. 34a shows a schematic structural diagram of the mesh plate as an air outlet of the heating module, and Fig. 34b shows a schematic structural diagram of an air inlet of the heating module.
Fig. 35 shows a schematic structural diagram of a heater of a heating module of a drying device of the present application, where Fig. 35a is a schematic diagram of a relative position between the heater and a mesh plate, and Fig. 35b is a structural diagram of a layout of the heater.
Fig. 36 shows a schematic diagram of a housing of a condensation module of a drying device of the present application.
Fig. 37 shows a schematic diagram of a condenser spoiler in a preferred embodiment, where Fig. 37a shows a condenser shell structure without a spoiler structure, and Fig. 37b shows a condenser shell structure with a spoiler structure.
Fig. 38 shows a schematic structural diagram of a laundry treatment apparatus according to an embodiment of the present application.
Fig. 39 shows a schematic structural diagram of a laundry treatment apparatus according to another embodiment of the present application.
Fig. 40 shows a schematic structural diagram of a laundry treatment apparatus according to yet another embodiment of the present application.

The corresponding relationships between reference numerals and component names in the above respective drawings are as follows:
Laundry treatment apparatus: container A, drying device B, water supply module C;
Drying device B: circulation module 10, dehumidification module 20, regeneration module 30, condensation module 40;
Water supply assembly C: a water inlet C0, a plurality of feed water inlets (container feed water inlet C1, filter screen feed water inlet C2, condenser feed water inlet C3, etc.), a drainage outlet C4;
Circulation module 10: circulation fan 101, air inlet channel 102, circulation air interface member 103, circulation fan sealing strip 104, corrugated pipe 1021, pressing plate 1022;
Circulation fan 101: motor 1011, impeller 1012;
Second circulation housing 506, first circulation housing 502, mounting region 502' for circulation fan of first housing of drying device;
Dehumidification module 20: dehumidification turntable 200, dehumidification part 201, regeneration part 202, air outlet channel 203, housing sealing ring 206, first turntable housing 501, second turntable housing 505, peripheral driving device 207, central driving device 208;
Dehumidification part 201: first housing dehumidification region separating member 501-2;
Regeneration part 202: second housing regeneration region assembling member 202-3, first housing regeneration region assembling member 202-2;
First turntable housing 501: first housing regeneration region separating member 501-1, first housing dehumidification region separating member 501-2, rotating shaft 501-3;
Second turntable housing 505: second housing dehumidification region 505-1, second housing regeneration region 505-2, second housing regeneration region separating member 505-3, circulation air outlet 505-4;
Dehumidification turntable 200: molecular sieve 200-1, driving wheel 200-2, auxiliary rotating ring 200-3, flexible roller 200-4, turntable sealing ring 200-5, circumferential damping member 200-6, central damping member 200-7, auxiliary roller 200-8;
Peripheral driving device 207: peripheral driving motor 207-1, peripheral transmission gear 207-2;
Central driving device 208: central driving motor 208-1, central transmission shaft 208-2;
Regeneration module 30: regeneration fan 301, heating module 302, regenerated air inlet 3011, regenerated air outlet 3012;
Regenerated air inlet connector 3013: upper part 3013-1 and lower part 3013-2, horizontal port 3013-3, vertical port 3013-4;
Regenerated air outlet connector 3014: upper part 3014-1 and lower part 3014-2, small port 3014-3, large port 3014-4;
Heating module 302: heater air inlet 302-1, heater air outlet 302-2, first sealing member 302-3, second sealing member 302-4;
Mesh plate 303, heating pipe 304, temperature controller 305, heat conduction sheet 305-1;
Condensation module 40: condenser 401, upper condenser housing 402, lower condenser housing 403, sealing member 404, condenser air inlet 405, condenser air outlet 406, spoiler 407;
Cooling water inlet 401-1, cooling water outlet 401-2, condensed water outlet 401-3;
Packaging housing 50:
   First housing: first turntable housing 501, first circulation housing 502, first condensation housing 503, regeneration housing 504, mounting part 509;
   Turntable mounting region 501', circulation mounting region 502', condensation mounting region 503', regeneration mounting region 504';
   First housing: second turntable housing 505, second circulation housing 506, second condensation housing 507;
   Filtering assembly 60: filter screen 601, cleaning nozzle 602, nozzle water supply pipe 603, condensation nozzle 605, filtering surface 6011, non-filtering surface 6012;
   Nozzle 602: connection part 6021, extension part 6022;
   Filtering mechanism 70: filter 720, spraying mechanism 740, nozzle 742, water supply system 744; and
   Air inlet passage 32, air outlet passage 34; frame 80; first switching mechanism 90, second switching mechanism 92, second switching mechanism 94.

### DETAILED DESCRIPTION

In the following, the specific embodiments of a drying device of a laundry treatment apparatus provided by the present application will be described in detail in combination with the accompanying drawings.

In order to make the objectives, technical solutions and advantages of the present application clearer, the present application is further described in detail in combination with specific embodiments and with reference to the accompanying drawings. However, it should be understood that these descriptions are merely exemplary and are not intended to limit the scope of the present application. In addition, in the following illustrations, the descriptions of commonly known structures and technologies are omitted to avoid unnecessarily confusing the concepts of the present application.

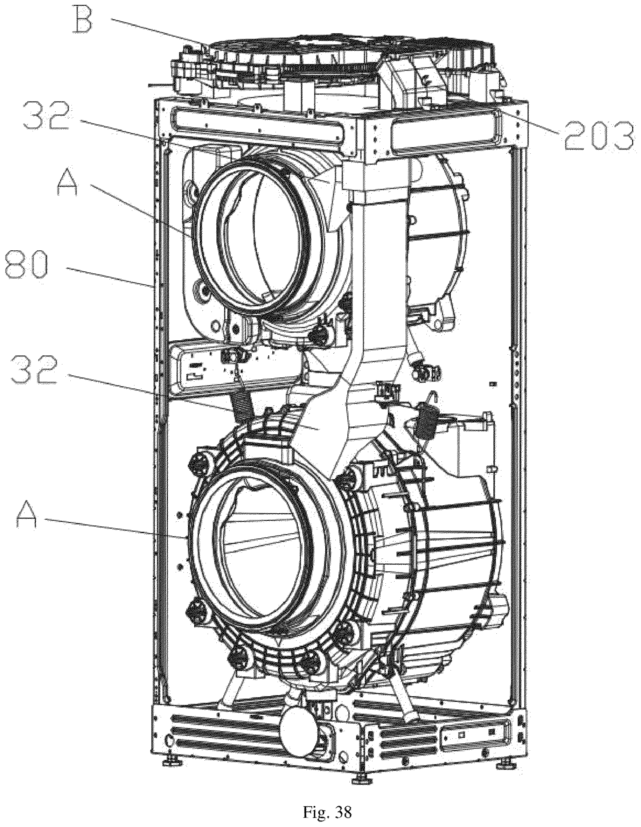

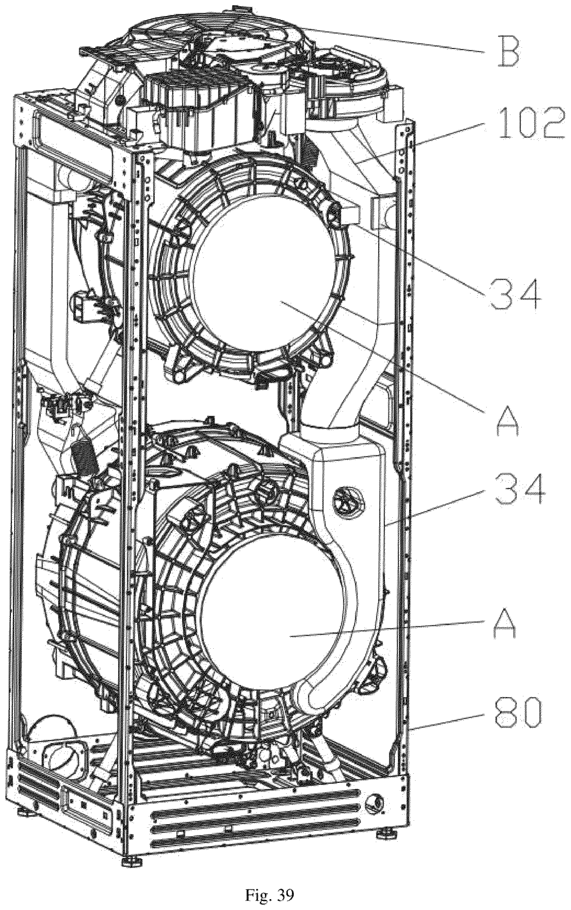

As shown in Fig. 38 to Fig. 40, the embodiments of the present application provide a laundry treatment apparatus, and laundry treatment may be defined as laundry washing and drying, etc. The laundry treatment apparatus of the present application includes at least two containers for accommodating laundry and a drying device. The containers arranged in parallel may be stacked vertically or horizontally, such that the laundry may be washed and dried in the containers, or may be dried only. Therefore, it may be defined in the present application that a washing machine is used for achieving laundry washing and drying functions, and a dryer is only used for achieving a drying function. The drying device alternatively dehumidifies the laundry in the containers, and a plurality of containers shares the drying device, so that the structure can be simplified, the overall height or width of the laundry treatment apparatus can be reduced, and the volume and cost of the whole apparatus are thus reduced.

In some embodiments, each container includes an air inlet passage 32 and an air outlet passage 34. The drying device alternatively dehumidifies the laundry in a container; for example, the air inlet passage 32 and the air outlet passage 34 of each container may be independently communicated with the drying device; or the air inlet passage 32 of each container is converged and then communicated with the drying device, and the air outlet passage 34 of each container is converged and then communicated with the drying device. The drying device may include an air inlet channel 102 for being connected to the air outlet passage 34 of the container and an air outlet channel 203 for being connected to the air inlet passage 32 of the container. Each container, the air outlet passage 34, the air inlet channel 102, the drying device, the air outlet channel 203 and the air inlet passage 32 form a circulation passage, so that a humid circulation airflow from each container is dehumidified by the drying device, and becomes a dry circulation airflow to enter the container to dry the laundry. This process is performed cyclically.

In some embodiments, the container for accommodating the laundry may be a laundry treatment tub of the washing machine or a laundry treatment tub of a laundry dryer; and at least two containers for accommodating the laundry may be stacked vertically or horizontally. For example, the laundry treatment apparatus according to the embodiments shown in Fig. 38 to Fig. 40 may be a washing machine, including a first tub and a second tub which are stacked vertically. Understandably, the laundry treatment apparatus according to the embodiments shown in Fig. 38 to Fig. 40 may also be a washing and drying integrated machine, in which an upper laundry treatment tub is an inner tub of the dryer and a lower laundry treatment tub is an inner tub of the washing machine, or the lower laundry treatment tub is an inner tub of the dryer and the upper laundry treatment tub is an inner tub of the washing machine. The laundry treatment apparatus according to the embodiments shown in Fig. 38 to Fig. 40 may also be a laundry dryer, in which an upper laundry treatment tub is an inner tub of an upper dryer and a lower laundry treatment tub is an inner tub of a lower dryer.

In some embodiments, the laundry treatment apparatus may further include a frame 80. Containers A may be stacked vertically within the frame 80, and are flexibly connected to the frame 80 to reduce vibrations caused by rotation of the containers A during operation. The drying device B may be arranged at the top of the frame 80; or the drying device B may be arranged at the bottom of the frame 80, that is, the drying device B is located below the containers A that are stacked vertically; or the drying device B may be arranged between the two containers A that are stacked vertically; or the drying device B may be arranged behind the two containers A that are stacked vertically. In an embodiment, the drying device B may be arranged at the top of the frame 80; and the drying device B may be provided with at least one mounting part 509 on a lower housing of the drying device B, and a mounting part 509 is connected and fixed to the top of the frame 80 through bolts.

In an example embodiment, the air inlet passage 32 is arranged on a sidewall of the container, and the air inlet passage 32 is close to the front or rear of the container. The air inlet passage 32 extends upward and is flexibly connected to the air outlet channel 203. The air outlet passage 34 is arranged on a rear wall or a front sidewall of the container, and the air outlet passage 34 is close to a left side or right side of the container. The air outlet passage 34 extends upward and is flexibly connected to the air inlet channel 102. On the whole, the air inlet passage 32 and the air outlet passage 34 are respectively arranged in front of and at rear of the container, so that a circulation airflow can be in full contact with laundry to be dried in the tub in the operation process. When the drying device B is located at the top of the frame 80, the air inlet passage 32 and the air outlet passage 34 of each container are both arranged to extend upward, be converged and then respectively connected to the air outlet channel 203 and the air inlet channel 102, and flexible connection may be adopted here to reduce the vibrations of the container from being transmitted to the drying device. When the air inlet passage 32 of the container is arranged at a front right side of the container, the air outlet passage 34 may be correspondingly arranged at a rear left side of the container. When the air inlet passage 32 of the container is arranged at a front left side of the container, the air outlet passage 34 may be correspondingly arranged at a rear right side of the container. In this way, a dry circulation airflow entering the container can form effective convection in the container and be in full contact with the laundry in the container, thus improving the drying efficiency.

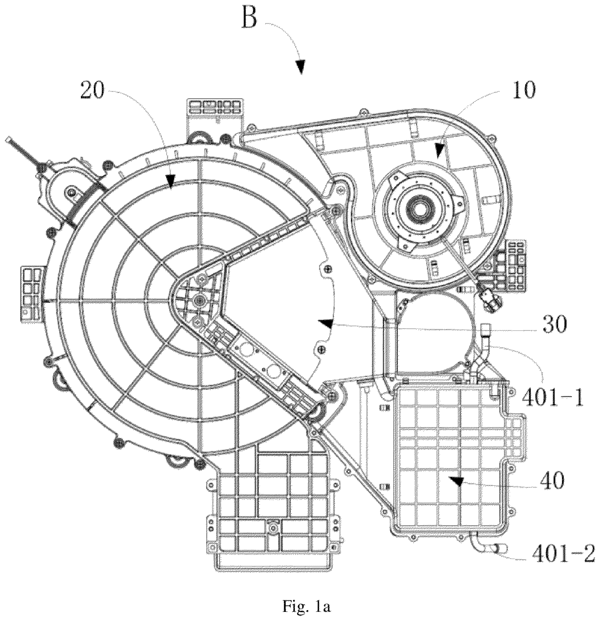

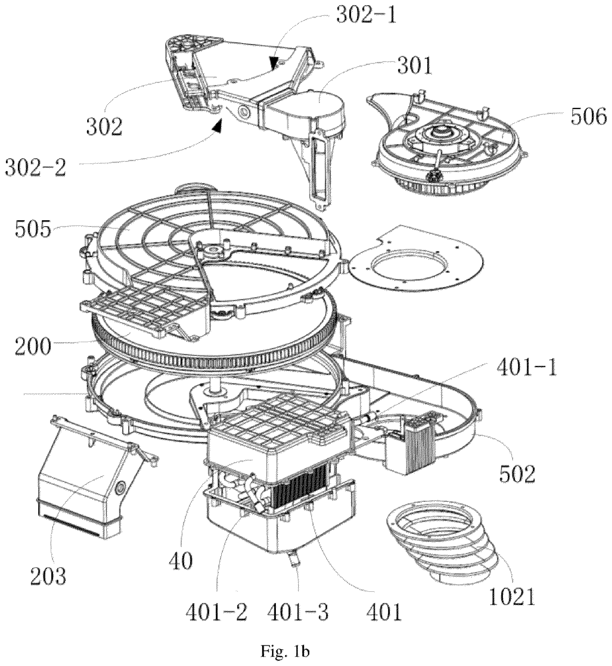

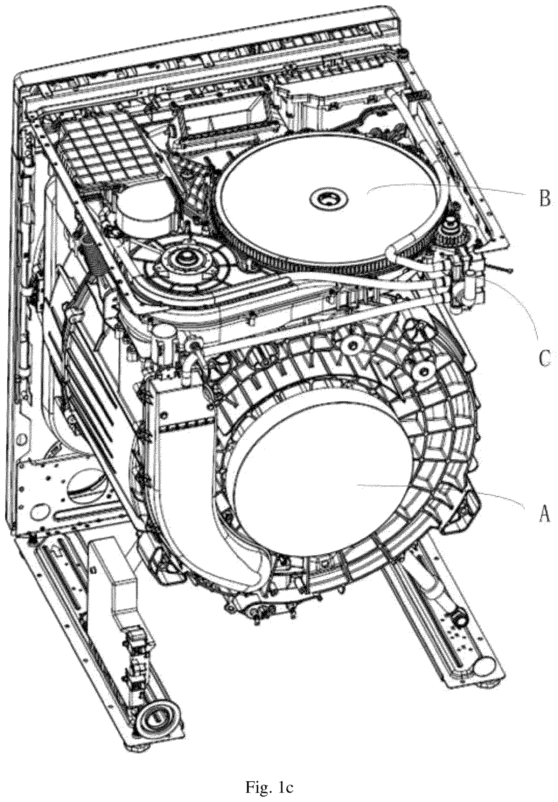

Fig. 1 is a schematic diagram of an overall structure of a drying device of a laundry treatment apparatus of the present application.

As shown in Fig. 1, the laundry treatment apparatus of the present application mainly includes the container A for washing, the drying device B for generating a dry airflow, and a water supply assembly C realizing water supply and drainage.

The container A includes an inner tub and an outer tub, where the inner tub is in transmission connection with a driving part to drive the inner tub to rotate and realize a laundry washing function.

The drying device B sequentially includes the following functional modules: a circulation module 10, a dehumidification module 20 and a regeneration module 30. In a preferred embodiment, the drying device B is further provided with a condensation module 40 and a filtering assembly 60.

Preferably, at least the circulation module 10, the dehumidification module 20 and the regeneration module 30 are arranged substantially within a plane, so as to reduce an overall thickness of the drying device B as much as possible and save an internal space of the laundry treatment apparatus. In a case that the condensation module 40 is arranged, the condensation module 40 is also preferably arranged within the plane where the dehumidification module 20 and the regeneration module 30 are located. However, the present application is not limited to this, and the condensation module 40 may also be arranged to be not within a plane with the regeneration module 30 if the space of the laundry treatment apparatus allows.

The water supply assembly C of the laundry treatment apparatus includes one water inlet C0, a plurality of feed water inlets (such as a container feed water inlet C1, a filter screen feed water inlet C2 for cleaning a filter screen, a condenser feed water inlet C3, etc.), and one drainage outlet C4. Among them, the water inlet C0 is communicated with an external water source, and is used for water supply to the whole laundry treatment apparatus through the external water source, and the water supply to the whole laundry treatment apparatus includes container washing water supply, filter screen self-cleaning water supply, condenser condensed water supply, or the like. The drainage outlet C4 is communicated with an external space and used for discharging wastewater generated by the laundry treatment apparatus to the outside of a machine body.

A constitution structure of the drying device B is described in detail below.

The circulation module 10 includes a circulation fan 101, an air inlet channel 102 and a circulation air interface member 103, and is used for sucking humid air from a washing machine container to form a circulation airflow and output the circulation airflow to the dehumidification module 20 for dehumidification, so as to remove moisture in the air and turn the humid air into dry air, and then return the dry air into the washing machine container. The air inlet channel 102 is communicated with the container A and the circulation fan 101 respectively, so that the humid air in the container A of the laundry treatment apparatus enters the circulation fan 101.

The circulation fan 101 rotates to generate a circulation airflow, and delivers the circulation airflow to the dehumidification module 20 for a dehumidification operation through the circulation air interface member 103. In an embodiment, the circulation fan 101 is preferably arranged in a horizontal direction, so as to convert the humid airflow from the container A below into a circulation airflow in a horizontal direction and input the circulation airflow into the dehumidification module 20 arranged horizontally.

Preferably, a filtering assembly is arranged upstream of the circulation fan 101 for filtering flying fluffs and impurities entering the dehumidification module 20. For example, a filtering assembly may be arranged either in the air inlet channel 102 or in an air outlet channel of the washing machine container.

The circulation air interface member 103 is arranged between the circulation fan 101 and the dehumidification module 20, and is used for communicating the circulation fan 101 with the dehumidification module 20 to form a circulation air duct therebetween.

The dehumidification module 20 includes a dehumidification turntable 200 and the air outlet channel 203, where the dehumidification module 20 further includes a dehumidification part 201 and a regeneration part 202.

The dehumidification turntable 200 may be formed as a rotating turntable (disc-shaped) or a rotating ring (annular) or a planar configuration capable of reciprocating motion. The dehumidification turntable 200 is made of a material capable of absorbing moisture, and is used for fully absorbing the moisture in the circulation airflow, so that the circulation airflow is turned into the dry airflow.

The dehumidification module 20 may be divided into at least two parts of the dehumidification part 201 and the regeneration part 202 according to functions, which are respectively formed as a fan shape and jointly combined into a disc or a ring. In an embodiment, preferably, a fan-shaped area of the dehumidification part 201 is greater than a fan-shaped area of the regeneration part 202, so that more regions can absorb the moisture in the circulation airflow. Of course, a cooling buffering part may be arranged between the dehumidification part 201 and the regeneration part 202 and used for cooling the turntable part heated by the regeneration part before entering the dehumidification part, further improving the moisture absorption efficiency.

The dehumidification part 201 is communicated with the circulation fan 101 through the circulation air interface member 103, and receives the humid circulation airflow delivered by the circulation fan 101. The dehumidification turntable 200 absorbs the moisture in the circulation airflow in the dehumidification part 201, so that the circulation airflow becomes dry, while the dehumidification turntable 200 itself absorbs the moisture and becomes humid.

A region where the regeneration part 202 is located is preferably provided with a heating module, and the moisture on the dehumidification turntable 200 is removed by heating and drying, so that the dehumidification turntable 200 becomes dry and a high-temperature and high-humidity airflow is generated. When moving to the regeneration part 202 after absorbing a large amount of moisture at the dehumidification part 201, the dehumidification turntable 200 is heated and dried to remove the moisture therein, so that the dehumidification turntable 200 becomes dry. When rotating to the dehumidification part 201, the dehumidification turntable 200 better absorbs the moisture in the circulation airflow. Therefore, the regeneration part 202 has a capability of enabling the dehumidification turntable 200 to regenerate and restore a moisture absorption function.

As mentioned above, the dehumidification turntable 200 can enable the circulation airflow to pass through, and absorbs the moisture in the circulation airflow from the circulation fan 101 at the dehumidification part 201. After the dehumidification turntable 200 moves into the regeneration part 202, the moisture absorbed by the dehumidification turntable 200 in the dehumidification part 201 can be removed, so that the dehumidification turntable 200 is kept dry continuously, so as to continuously absorb the moisture in the circulation airflow.

The air outlet channel 203 is arranged outside the dehumidification module 20 to communicate the dehumidification module 20 and the container A, and is used for the dry circulation airflow after dehumidification to flow into the container A, so as to dry laundry in the container A.

Optionally, a humidity detection device may be arranged at a position such as the above-mentioned dehumidification part and/or air outlet channel, to detect the air humidity at these positions and send it to a control device through which rotation speeds and airflow speeds of the circulation fan, the dehumidification turntable and/or the regeneration fan are controlled.

The regeneration module 30 includes a regeneration fan 301 and a heating module 302. The regeneration module 30 is arranged to be communicated with the regeneration part 202 of the dehumidification module 20, and is used for removing the moisture of the dehumidification turntable 200 in the region where the regeneration part 202 is located, so that the dehumidification turntable 200 is restored to a dry state and the high-temperature and high-humidity airflow is generated. Furthermore, the regeneration module 30 generates a regenerated airflow to take away and discharge the high-temperature and high-humidity airflow generated by the regeneration part 202, and inputs a low-humidity dry airflow to the regeneration part 202 to continuously remove the moisture of the dehumidification turntable 200 in the region where the regeneration part 202 is located and restore its moisture absorption function.

Optionally, the drying device B is further provided with the condensation module 40 downstream of the regeneration module 30, and the condensation module 40 is communicated with a regenerated air outlet of the regeneration module 30, and is used for condensing the high-temperature and high-humidity regenerated airflow outputted from the regenerated air outlet to form a low-temperature dry airflow, and discharging the low-temperature dry airflow into the atmosphere through an air outlet of the condensation module 40, so as to avoid adverse effects on the atmospheric temperature and humidity of the space where the laundry treatment apparatus is located. Alternatively, preferably, the air outlet of the condensation module 40 is communicated with a regenerated air inlet of the regeneration module 30, so that the low-temperature dry airflow generated by the condensation module 40 is delivered to the regeneration fan 301, and enters the regeneration module 30 again for regeneration circulation.

In an optional embodiment of the present application, a filtering assembly 60 is arranged at an air inlet upstream position of the circulation fan 101, preferably within the air inlet channel 102, and is used for filtering the flying fluffs and impurities in the airflow flowing from the container to the dehumidification module 20, so as to prevent the flying fluffs or impurities from entering the dehumidification module 20, especially from entering the dehumidification turntable 200; otherwise, the dehumidification turntable 200 will be blocked and the dehumidification effect will be affected. Furthermore, if the flying fluffs adhered to the dehumidification turntable 200 are brought into the regeneration part during rotating, these fluffs are easy to be ignited due to the heating module of the regeneration part.

In the present application, optionally, the dehumidification turntable may also be formed as a cylindrical structure, that is, a dehumidification cylinder, and correspondingly, the turntable housing is also formed as a cylindrical structure. In this case, the circulation module and the regeneration module are arranged in various ways. For example, the circulation module and the regeneration module are respectively arranged on the inner side and the outer side of the dehumidification cylinder, or are both arranged on the inner side or the outer side of the dehumidification cylinder.

An embodiment in which the circulation module and the regeneration module are respectively arranged on the inner side and the outer side of the dehumidification cylinder is described in detail as an example.

The circulation module is arranged at interior of the dehumidification cylinder. The whole dehumidification module is sleeved on the periphery of the circulation fan, the air inlet of the circulation fan is communicated with the washing machine container, and the dehumidification cylinder dehumidifies the humid airflow from the washing machine container. The inner wall of the dehumidification cylinder sucks in the humid air from the circulation fan, which is dehumidified and dried by the dehumidification cylinder and then discharged from an outer wall of the dehumidification cylinder. Correspondingly, the regeneration module is arranged on the periphery of the dehumidification cylinder to dry and dehumidify an outer side region of the dehumidification cylinder and regenerate and restore its dehumidification capability. At this time, the inner side region of the dehumidification cylinder is formed as the dehumidification part, and the outer side region of the dehumidification cylinder is formed as the regeneration part. Accordingly, a circulation path of the dehumidification circulation is: container--circulation fan--interior of dehumidification cylinder--outer wall of dehumidification cylinder.

Optionally, the circulation may also be carried out according to a path opposite to the above path. That is, the circulation module is arranged on the periphery of the dehumidification cylinder and the regeneration module is arranged at interior of the dehumidification cylinder. Accordingly, a circulation path of the dehumidification circulation is: container--circulation fan-outer wall of dehumidification cylinder-interior of dehumidification cylinder.

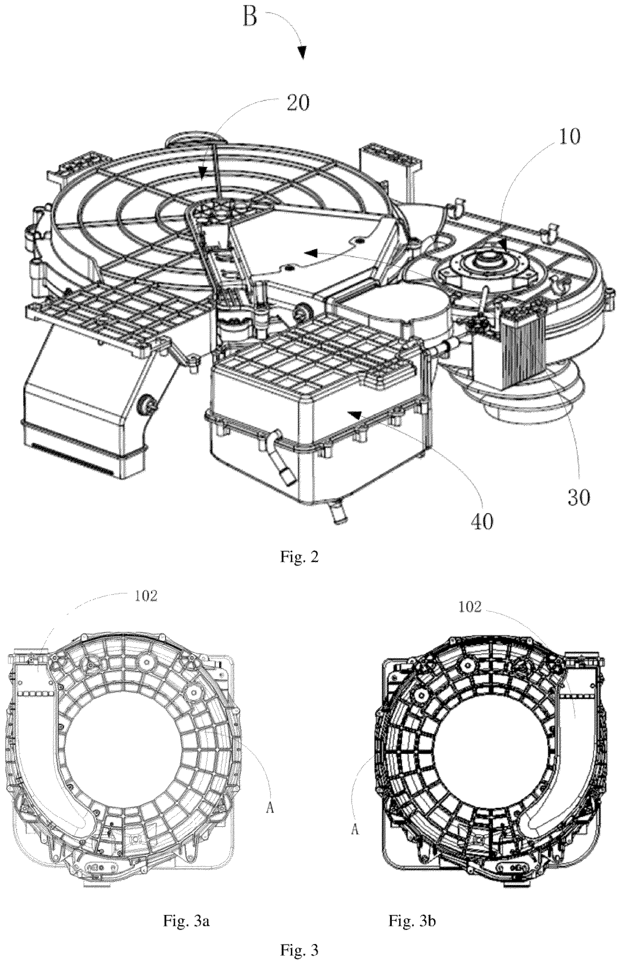

Fig. 2 shows a position structural diagram of a drying device of a laundry treatment apparatus of the present application.

As shown in Fig. 2, in a preferred embodiment of the present application, the drying device B is arranged above a washing container of the laundry treatment apparatus.

As mentioned above, at least two of the circulation module 10, the dehumidification module 20 and the regeneration module 30 in the drying device B are arranged substantially within a plane, that is, within a plane parallel to a rotating shaft of the container. In this preferred embodiment, in order to minimize the height of the washing machine, the drying device B is horizontally arranged above the container of the laundry treatment apparatus. That is to say, at least the rotating shaft of the circulation module 10, the rotating shaft of the dehumidification module 20 and the rotating shaft of the regeneration module 30 in the drying device B are parallel to each other and perpendicular to the rotating shaft of an upper housing of the washing machine or of the container of the laundry treatment apparatus.

In this case, the overall height of the laundry treatment apparatus depends on a diameter of the container and a thickness of the dehumidification module 20 (including the its housing) placed above the container, while the circulation module 10, the regeneration module 30, the condensation module 40 or the like may be arranged above the side of the container (since the container is approximately horizontal cylindrical, there will be greater vertical space above the side of the container for mounting the circulation fan, the regeneration fan and the condenser).

Furthermore, since the diameters of the dehumidification turntable 200 and the circulation fan 101 are relatively larger, the dehumidification turntable 200 and the circulation fan 101 occupy most of the plane region of the drying device B. Preferably, the dehumidification turntable 200 and the circulation fan 101 may be arranged such that their rotating shafts are in a different plane from and substantially perpendicular to or form an included angle with the rotating shaft of the container, and are distributed on either side of the rotating shaft of the container. In this way, the positions and paths of the air inlet channel 102 and the air outlet channel 203, which communicate with the drying device B with the container, can be set more conveniently, so that the circulation path of the circulation air is smoother and the circulation drying efficiency is improved. In addition, under such a structural arrangement, the dehumidification turntable 200 and the circulation fan 101 can be more reasonably distributed in space above the container, and the height of the whole machine body is reduced as a whole.

In the present embodiment, a diameter of the regeneration fan 301 is set to be less than a diameter of the circulation fan 101, and the diameter of the circulation fan 101 is less than a diameter of the dehumidification turntable 200, mainly since the circulation airflow needs a higher flow speed and flow rate to increase the moisture absorption efficiency of the turntable. Therefore, preferably, the regeneration fan 301, which may be arranged on a side of the circulation fan 101, and the dehumidification turntable 200 occupy either side of the rotating shaft of the container respectively, so as to make full use of a limited space inside the laundry treatment apparatus and facilitate path setting and smooth airflow of the circulation air and the regenerated air.

In the present embodiment, since the drying device B is horizontally arranged above the container of the laundry treatment apparatus, the air inlet channel 102 of the drying device (that is, the air outlet channel of the container) may be communicated with an air outlet of the container A and an air inlet of the circulation fan 101 in a preferred path, so that the humid air in the container A of the laundry treatment apparatus can enter the circulation fan 101 more smoothly and quickly. Similarly, the air outlet channel 203 may be communicated with the air outlet of the dehumidification module 20 and the air inlet of the container A in a preferred path, so that the dry circulation airflow after dehumidification flows into the container A more smoothly and quickly to dry the laundry in the container A.

Fig. 3 shows a schematic position diagram of an air inlet channel of a drying device according to an embodiment of the present application.

As shown in Fig. 3a, the air inlet channel 102 of the drying device is arranged at a rear left side of the container, and other components are as described above.

In another embodiment, optionally, the air inlet channel 102 of the drying device may also be arranged at a rear right side of the container, as shown in Fig. 3b. In this case, the positions of other components of the drying device also change accordingly. For example, a position of the circulation fan directly or indirectly connected to the air inlet channel 102 is also set above the rear right side of the container accordingly so as to be communicated with the air inlet channel 102. At the same time, the planning and setting of a water inlet pipeline of the whole machine can also be simplified. For example, a filter screen self-cleaning waterway does not need to cross the container as shown in Fig. 3a.

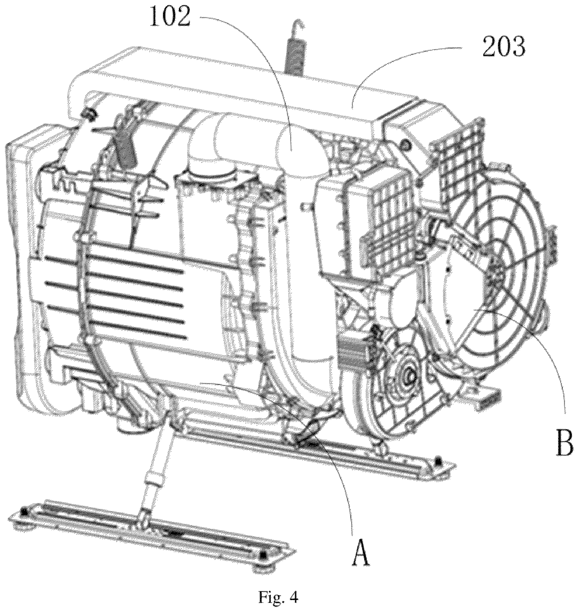

Fig. 4 is a position structural diagram of a drying device according to another embodiment of the laundry treatment apparatus of the present application.

As shown in Fig. 4, in another embodiment of the present application, optionally, the plane where the drying device B is located is perpendicularly arranged at the back of the container, and is substantially perpendicular to the rotating shaft of the container. In this case, various modules, i.e., the circulation module 10, the dehumidification module 20, the regeneration module 30 and the condensation module 40 in the drying device B are preferably arranged within a plane substantially perpendicular to the rotating shaft of the container. Furthermore, the dehumidification turntable 200 and the circulation fan 101 may be arranged such that their rotating shafts are parallel to the rotating shaft of the container and distributed on either side of the rotating shaft of the container. Similarly, the regeneration fan 301, which may be arranged on a side of the circulation fan 101, and the dehumidification turntable 200 occupy either side of the rotating shaft of the container respectively.

Furthermore, in the present embodiment, the air inlet channel 102 of the drying device B is arranged to extend along a radial direction of the container and communicate the air outlet in the upper part of the container with the air inlet of the circulation fan 101. The air outlet channel 203 is arranged to extend along an axial direction of the container and communicate the air outlet of the dehumidification module 20 with the air inlet at the front end of the container.

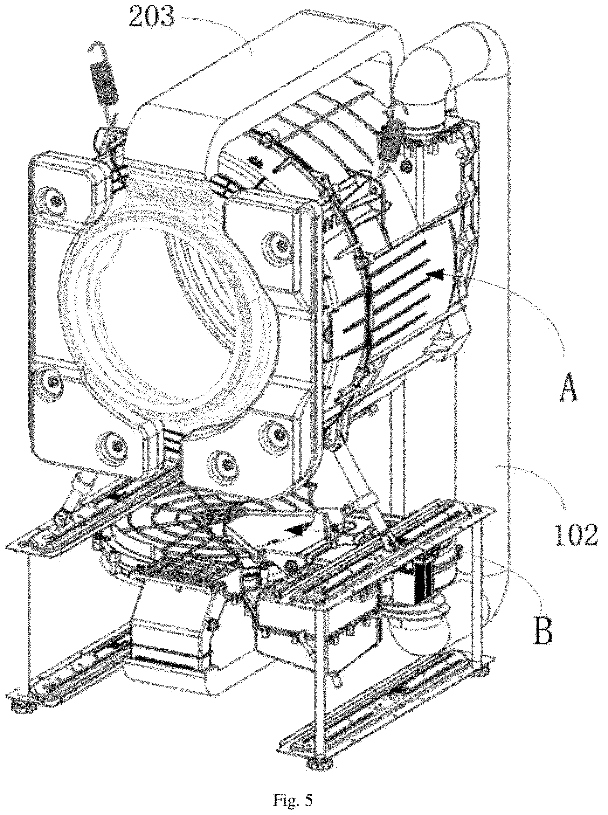

Fig. 5 is a position structural diagram of a drying device according to yet another embodiment of the laundry treatment apparatus of the present application.

As shown in Fig. 5, in another embodiment of the present application, optionally, the drying device B may be arranged below the container A. In this case, the circulation module 10, the dehumidification module 20, the regeneration module 30 and the condensation module 40 in the drying device B are preferably arranged in a plane parallel to the rotating shaft of the container. Furthermore, the dehumidification turntable 200 and the circulation fan 101 may be arranged such that their rotating shafts are substantially perpendicular to or form an included angle with the rotating shaft of the container, and are distributed on either side of the rotating shaft of the container. Similarly, the regeneration fan 301, which may be arranged on a side of the circulation fan 101, and the dehumidification turntable 200 occupy either side of the rotating shaft of the container respectively.

Furthermore, in the present embodiment, the air inlet channel 102 of the drying device B is arranged to extend along the bottom part, the back part and/or the upper part of the laundry treatment apparatus in sequence and communicates the air outlet of the container with the air inlet of the circulation fan 101. The air outlet channel 203 is arranged to extend along the back part of the laundry treatment apparatus and communicates the air outlet of the dehumidification module 20 with the air inlet of the container.

The structure of a packaging housing of the drying device B of the laundry treatment apparatus of the present application will be introduced below.

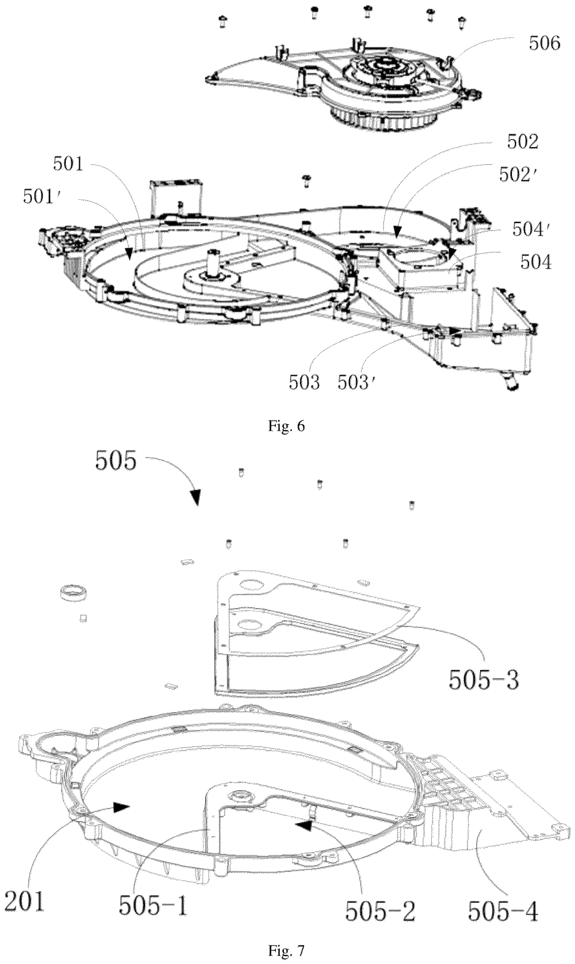

Fig. 6 shows a structural diagram of a lower housing of a packaging housing of the drying device of the present application.

Referring to Fig. 6, in the present application, the packaging housing 50 of the whole drying device B includes a first housing and a second housing. The first housing may be arranged as a lower housing, and the second housing may be arranged as an upper housing. Among them, a first turntable housing 501 for housing the dehumidification turntable 200, a first circulation housing 502 for housing the circulation fan 101, a first condensation housing 503 for housing a condenser 401, and a regeneration housing 504 for housing the regeneration fan 301 are formed on the first housing. These first housing components may be integrally formed as an integrated lower housing, or may be a plurality of discrete component housings.

The second housing includes a second turntable housing 505, a second circulation housing 506, a second condensation housing 507, etc., which are discretely arranged. These housing components will be described in detail below.

Fig. 6 shows a structural diagram of the lower housing of the packaging housing of the drying device according to an embodiment of the present application.

As shown in Fig. 6, in a specific embodiment of the present application, preferably, various lower housing components of the drying device B are integrally formed as an integrated lower housing, and one or more mounting parts 509 are correspondingly arranged at the positions of the lower housing corresponding to a shell edge of the laundry treatment apparatus and used for fixing the whole drying device B to a washing machine frame.

In the present embodiment, the integrated lower housing of the drying device is respectively provided with a turntable mounting region 501', a circulation mounting region 502', a condensation mounting region 503' and a regeneration mounting region 504'. Among them, the circulation fan includes a fan impeller, the second circulation housing 506 covering the impeller and a motor respectively, and the circulation mounting region 502'. The regeneration fan 301 may be an integrated fan. In this case, it is only needed to reserve a mounting space on the housing of the drying device.

In the present embodiment of the present application, the drying device has the integrated lower housing. The whole drying device is fixedly mounted to an outer frame of the washing machine through the mounting parts 509 on the lower housing and/or the upper housing. Preferably, flexible corrugated pipes are arranged at the parts of the air outlet channel and the air inlet channel of the container which are communicated with the drying device, to prevent the vibrations of the container from being transmitted to the drying device.

Referring to Fig. 6, in another embodiment of the present application, optionally, various assemblies of the drying device B are assembled in a separate manner. In this case, the lower housing of the drying device B includes a plurality of component housings such as the first turntable housing 501, the first circulation housing 502, the first condensation housing 503 and the regeneration housing 504, which are formed in a separate manner. That is, the drying device is formed through assembly of the above various housings.

Furthermore, in the present embodiment, these assembly housings are fixedly and rigidly connected to an outer tub body of the container, and vibrate along with the movement of the container during washing and drying. In this form, since the dehumidification turntable is brittle, the vibration may affect the dehumidification turntable, and the members that keep rotating during drying possibly damage the dehumidification turntable.

In yet another embodiment of the present application, optionally, various assemblies of the drying device B are assembled in a separate manner. Furthermore, the first turntable housing 501 is fixedly and rigidly connected to the washing machine frame, while other assembly housings (the first circulation housing 502, the first condensation housing 503, the regeneration housing 504, etc.) are fixedly and rigidly connected to the container outer tub in a separate or integrated manner or selectively connected to the washing machine frame.

The advantage of such an arrangement is that the container vibration has less influence on other assemblies than the dehumidification turntable, so that the damage to the dehumidification turntable can be effectively avoided, and the cost of the integrally formed lower housing of the drying device is reduced at the same time. Furthermore, in this case, an joint between the air inlet (at the interface between the first turntable housing 501 and the circulation module 10) and the air outlet (at the interface between the second turntable housing 505 and the washing machine container, and communicated with the air outlet channel 203) of the dehumidification module 20 is preferably formed as flexible connection (such as a corrugated hose), so as to further prevent the vibration of the container from being transmitted to the dehumidification turntable through other assemblies and reduce its vibration damage.

Furthermore, preferably, a regenerated air outlet connector 3014 and a regenerated air outlet 3012 in the regeneration module 30, which are communicated with the heating module 302, are also arranged as the flexible connections (such as corrugated hoses). That is to say, the flexible connections are adopted for all pipelines between the dehumidification turntable housing and the assemblies generating vibration, so as to isolate the transmission of the vibration and reduce the damage of the vibration to the dehumidification turntable.

Fig. 7 shows a structural diagram of the upper housing of the packaging housing of the drying device of the present application.

As shown in Fig. 7, in a specific embodiment of the present application, preferably, the upper housing of the drying device B is formed as the second turntable housing 505, the second circulation housing 506, the second condensation housing 507, or the like, which are discrete.

Among them, a second housing regeneration region separating member 505-3 is arranged inside the second turntable housing 505, and is used for at least separating the dehumidification turntable into two regions of the dehumidification part 201 and the regeneration part 202 in the second turntable housing 505. Preferably, the area of the regeneration part 202 is less than the area of the dehumidification part 201.

In an embodiment of the present application, the connection and fixation between the drying device and a washing machine body are realized mainly through two components of the washing machine frame and the washing machine container. The connection structure between the drying device and the washing machine of the present application will be described in detail below.

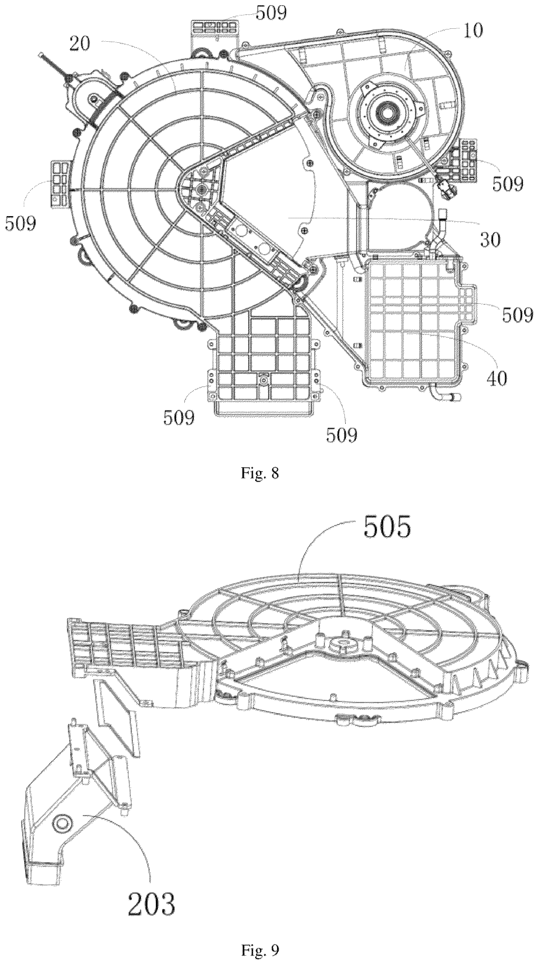

Fig. 8 shows a connection structure between the drying device and the washing machine frame of the present application.

In the following, the connection structure will be illustrated by taking an embodiment in which the drying device is arranged on top of the washing machine as an example, however the present application is not limited to this.

In this preferred embodiment, the drying device is mounted onto the top of the washing machine frame in the form of an integrated module, and is fixed on a top front bracket, a left bracket, a right bracket and a rear box body on a washing machine box body through the mounting parts 509 protruding from the upper housing and the lower housing of the drying device, thus ensuring the stability of the whole system and providing a space for the layout of lines and pipelines.

The mounting parts 509 of the drying device are preferably formed with a plurality of lapping parts (or lugs) at an edge of the lower housing and/or the upper housing of the drying device to facilitate the mounting and fixing, and are lapped to the washing machine frame to be locked and fixed, so as to realize the mounting and fixing of the whole drying device.

As shown in Fig. 8, at least one mounting part 509 is arranged at each of the positions corresponding to four frame edges 1 at the top of the washing machine frame respectively. These mounting parts 509 are integrally formed on the lower housing and/or the upper housing of the drying device, and are lapped to the washing machine frame in a proper manner to be fastened and mounted, so as to realize the mounting and fixing of the whole drying device, so that no rigid connection between the drying device and the outer tub of the container is directly generated, which prevents the vibration during operation process of the container from being transmitted to the drying device, especially to the dehumidification turntable 200.

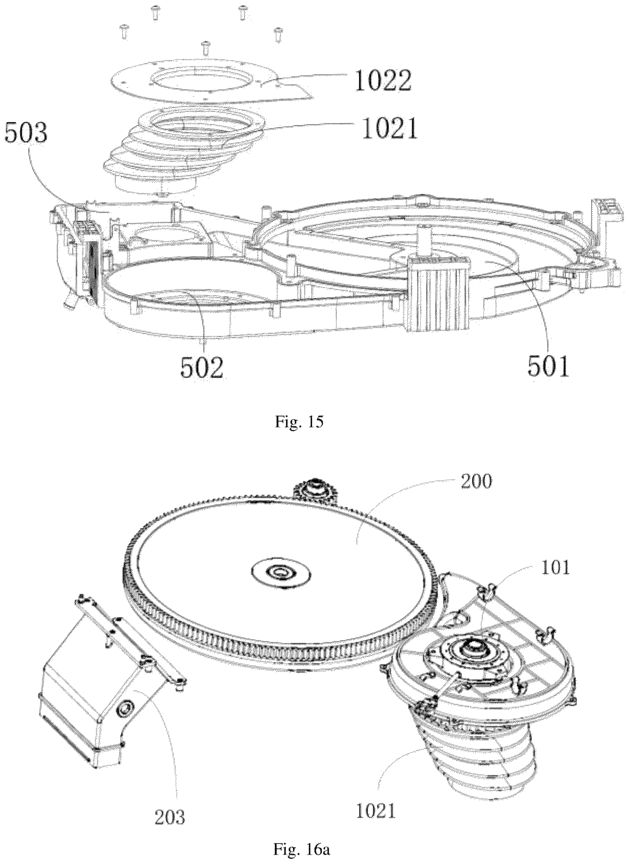

Fig. 9 and Fig. 15 show a connection structure between the drying device and the container of the washing machine of the present application.

As shown in Fig. 9, a connection part between the lower housing of the drying device and the container of the washing machine adopts a flexible connection, such as a corrugated hose. Specifically, the vibration of the container is prevented from being transmitted to the rigid air outlet channel 203, thus preventing the vibration from being transmitted to the whole drying device.

As mentioned above, the air inlet channel 102 of the circulation module 10 in the present application is communicated with the container A and the circulation fan 101 respectively, so that the humid air in the container A of the laundry treatment apparatus conveniently enters the circulation fan 101. In an embodiment of the present application, preferably, a flexible connection, such as a corrugated hose, is also adopted between the air inlet channel 102 and the container of the washing machine, so as to prevent the vibration of the container from being transmitted to the rigid air inlet channel 102, thus prevent the vibration from being transmitted to the whole drying device, as shown in Fig. 15.

It should be noted that the connection structures between the drying device and the washing machine frame and between the drying device and the washing machine container in the above embodiment of the present application are suitable for an embodiment in which the lower housing of the drying device is integrally formed, and are also suitable for an embodiment in which the lower housing of the drying device is assembled in a separate manner.

As mentioned above, the position of the drying device in the present application may be set in various ways. For example, the drying device may be arranged above, at the back of or below the washing machine container respectively. Correspondingly, the air inlet channel 102 of the drying device may also be arranged at a plurality of positions, such as on a rear left side, on a rear right side, at an upper part, on a front side or the like of the washing machine container.

In some preferred embodiments of the present application, the air inlet channel 102 of the drying device may be arranged at on a front side of the washing machine container (i.e., a side of the opening of the washing machine container), or arranged to pass through the front side of the washing machine container, for example, may be arranged to extend from the rear left side of the container to the front left side of the container.

In this case, a modified structural design may be carried out. For example, a front filter screen may be arranged at a position of the air inlet channel 102 on the front side of the washing machine container, so as to facilitate manual removal of the filter screen from the front panel of the washing machine. Since the filter screen needs to be removed manually, an optimal solution is to set a filter screen box with the filter screen at a certain position on the front panel of the washing machine, so that the air inlet channel 102 (that is, an air outlet pipeline of the container) of the drying device is actually cut off by the filter screen box. At least a part of the air inlet channel 102 (which is open and through which a pipeline wall can be matched and engaged with the filter screen box hermetically) is close to the front panel of the washing machine body, so as to facilitate manual removal of the filter screen.

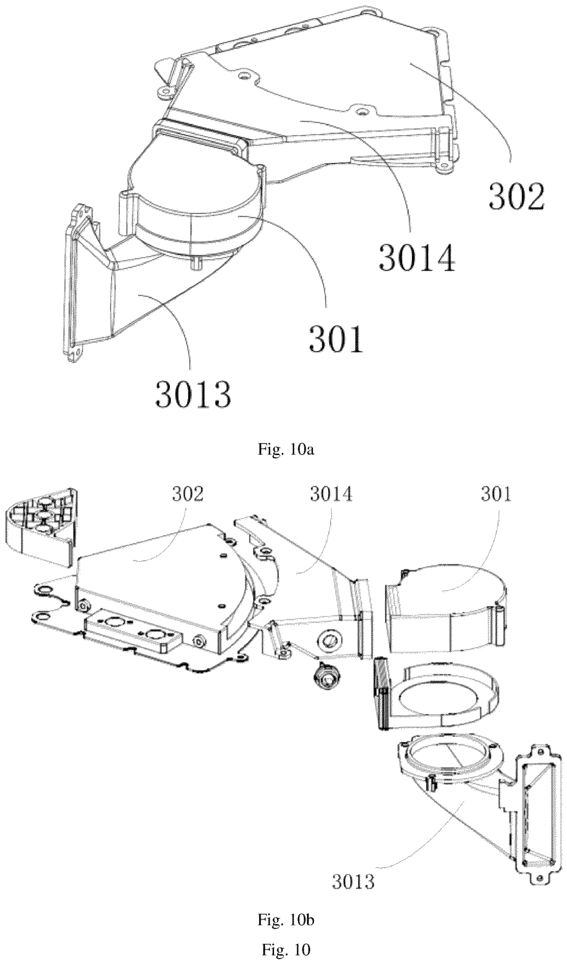

Fig. 10 is a schematic structural diagram of the regeneration module of the laundry treatment apparatus of the present application, where Fig. 10a is an assembling structural diagram of the regeneration module, and Fig. 10b is an exploded structural diagram of the regeneration module.

Referring to Fig. 1 and Fig. 10, the regeneration module 30 in the drying device of the present application includes the regeneration fan 301 and the heating module 302.

The regeneration fan 301 is used for delivering a dry regenerated airflow to the heating module 302, and taking away and discharging a high-temperature humid airflow generated by the regeneration part 202 of the dehumidification turntable 200. An air inlet of the regeneration fan 301 is the regenerated air inlet 3011, and optionally is communicated with the atmosphere, so that the dry air in the atmosphere is inputted to the regeneration fan 301 to generate the regenerated airflow. An air outlet (not shown) of the regeneration fan 301 is communicated with the heating module 302, and the regenerated airflow is turned into a high-temperature dry regenerated airflow after being heated by the heating module 302, so as to better dehumidify and dehydrate the regeneration part 202 of the dehumidification turntable adjacent to the heating module 302.

The regeneration module 30 is provided with the regenerated air inlet 3011 and the regenerated air outlet 3012. Specifically, the regenerated air inlet 3011 is communicated with a dry air source, such as the atmosphere, and is used for inputting the dry air to the regeneration fan 301. The regenerated air outlet 3012 is communicated with the atmosphere or the condensation module 40, and is used for discharging the high-temperature and high-humidity regenerated airflow generated in the region of the regeneration part 202 into the atmosphere or into the condensation module 40. Optionally, the regenerated air outlet 3012 is arranged on a housing in the region of the regeneration part 202 of the dehumidification turntable 200.

In a specific embodiment, preferably, the regeneration module 30 further includes a regenerated air outlet connector 3014 for communicating the regeneration fan 301 with the heating module 302. One port of the regenerated air outlet connector 3014 is hermetically communicated with an air outlet of the regeneration fan 301, and the other port of the regenerated air outlet connector 3014 is hermetically communicated with the heating module 302, and is formed as an opening shape matched with the fan-shaped surface of the heating module 302.

The heating module 302 is arranged at a downstream position of the regeneration fan 301, and is used for heating the regenerated airflow generated by the regeneration fan 301. In a specific embodiment, the heating module 302 is arranged in a region where the regeneration part 202 is located, and may further heat and dry the dehumidification turntable 200 in the region of the regeneration part 202, so as to heat and evaporate the moisture absorbed by the dehumidification turntable 200 into a high-temperature humid airflow. Optionally, a preheating module (not shown) may be arranged at an upstream position of the regeneration fan 301, and may preheat the regenerated air entering the regeneration fan 301 to a certain temperature. After entering the heating module 302 through the regeneration fan 301, the preheated regenerated air may be heated to a predetermined temperature at a faster speed, thus improving a regeneration and recovery ability of the regeneration part on the dehumidification turntable.

As mentioned above, referring to Fig. 10 to Fig. 13, in an embodiment of the present application, a regeneration circulation is formed by the regenerated air inlet connector 3013-the regeneration fan 301-the regenerated air outlet connector 3014-the heating module 302-the condenser 401. The regenerated air flows in the regeneration circulation system; the dry low-temperature airflow is continuously inputted into the regeneration part 202; and the high-temperature and high-humidity airflow generated by heating the regeneration part 202 by the heating module 302 is taken away for replacement and outputted to the atmosphere or the condenser 401, and is converted into the low-temperature dry airflow again, so that the dehumidification function of the regeneration part 202 is regenerated and restored to continuously dehumidify the dehumidification turntable 200.

A circulation path of the regenerated airflow in the regeneration module 30 may be closed-loop circulation or open circulation, which corresponds to different connection structures respectively, as described in detail below.

Referring to Fig. 10, in an embodiment of the open circulation, the regenerated air inlet 3011 and the regenerated air outlet 3012 are both arranged to be communicated with the atmosphere. In this case, the circulation path of the regenerated airflow is: the atmosphere (dry)-the regenerated air inlet 3011-the regeneration fan 301-the air outlet of regeneration fan 301-the heating module 302 (high temperature)-the regeneration part 202 (high temperature and high humidity)-the regenerated air outlet 3012-the atmosphere.

In another preferred embodiment, the condensation module 40 is further arranged downstream of the regenerated air outlet 3012, and the regenerated air outlet 3012 is communicated with an air inlet of the condensation module 40. At this time, the condensation module 40 is used for condensing the high-temperature and high-humidity regenerated airflow outputted from the regenerated air outlet 3012 to form the low-temperature dry airflow, which is discharged to the atmosphere through the air outlet of the condensation module 40, avoiding adverse effects on an atmospheric temperature and humidity of the space where the laundry treatment apparatus is located. Here, the condensed water generated by condensation of the high-temperature and high-humidity regenerated airflow in the condensation module 40 is discharged through a condensed water outlet of the condensation module 40.

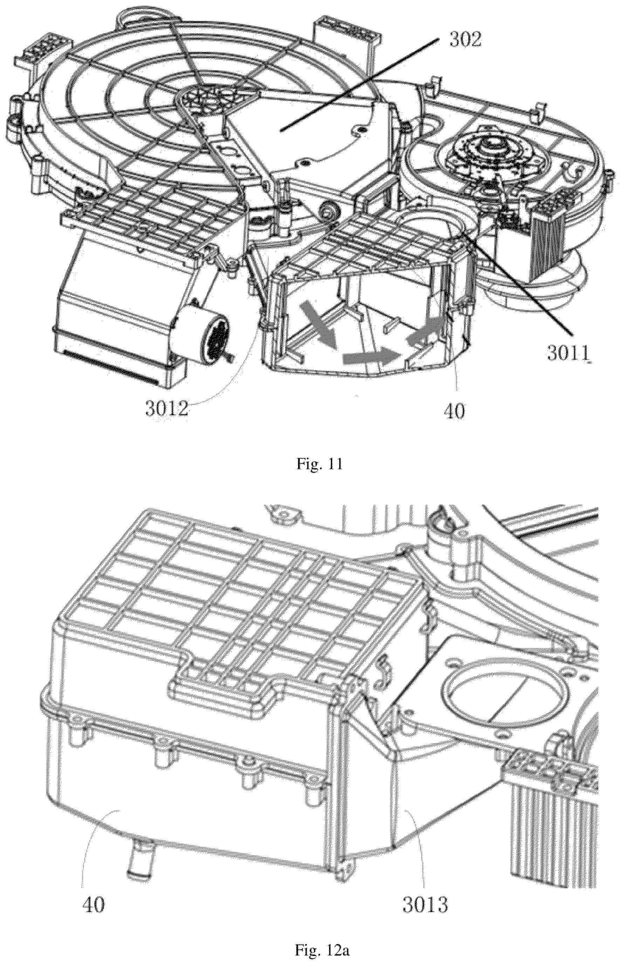

Fig. 11 shows a schematic diagram of the closed-loop regeneration circulation structure of the regeneration module of the laundry treatment apparatus of the present application.

As shown in Fig. 11, in an embodiment of the closed-loop circulation, the condensation module 40 is arranged downstream of the regenerated air outlet 3012, the regenerated air outlet 3012 is communicated with the air inlet of the condensation module 40, and the air outlet of the condensation module 40 is communicated with the regenerated air inlet 3011. In this case, the circulation path of the regenerated airflow is: the air outlet of condensation module 40 (low-temperature dry)- the regenerated air inlet 3011- the regeneration fan 301- the air outlet of regeneration fan 301- the heating module 302 (high temperature)- the regeneration part 202 (high temperature and high humidity)- the regenerated air outlet 3012- the air inlet of condensation module 40- the condensation module 40 (low-temperature dry), and finally the regenerated airflow returns to the air inlet of the regeneration fan, i.e., the regenerated air inlet 3011.

Here, the condensation module 40 is used for condensing the high-temperature and high-humidity regenerated airflow outputted from the regenerated air outlet 3012 to form a low-temperature dry airflow. Condensed water generated by condensation of the high-temperature and high-humidity regenerated airflow in the condensation module 40 is discharged through the condensed water outlet of the condensation module 40.

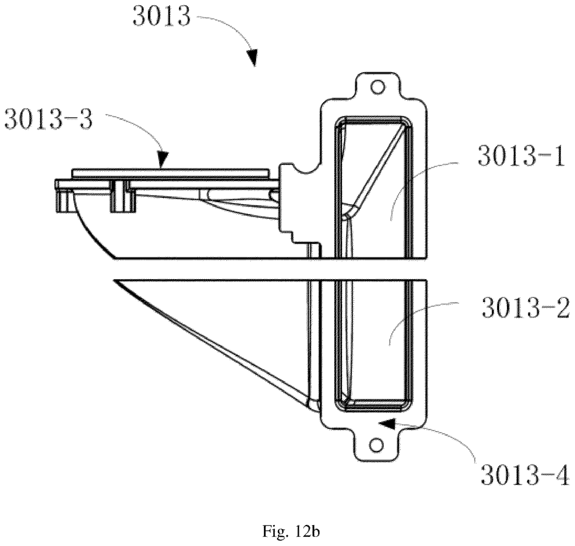

Fig. 12 shows a schematic structural diagram of the regenerated air inlet connector according to an embodiment of the present application, where Fig. 12a shows a schematic diagram of a connection structure of the regenerated air inlet connector, and Fig. 12b shows a schematic diagram of an internal structure of the regenerated air inlet connector.

Referring to Fig. 12, in an embodiment of the present application, the air inlet of the regeneration fan 301 is also the regenerated air inlet 3011 of the regeneration module 30. The regenerated air inlet connector 3013 is formed as an air duct member with two ports for ventilation, including a horizontal port 3013-3 with an opening in the horizontal direction and a vertical port 3013-4 with an opening in the vertical direction. Therefore, the regenerated air inlet connector 3013 is integrally formed as a curved shape transiting from a horizontal opening to a vertical opening, so as to be more compactly and hermetically communicated with the condensation module 40 and the regeneration fan 301 and reverse the airflow.

Among them, the horizontal port 3013-3 is arranged to be communicated with the regeneration fan 301 (connected to the regenerated air inlet 3011), and is preferably formed as an approximately circular opening in the horizontal direction, so as to be communicated with the horizontally arranged regeneration fan 301 in the vertical direction. The vertical port 3013-4 is arranged to be communicated with the condenser 401, and is used for the regeneration fan 301 to suck the low-temperature dry airflow from the atmosphere or the condensation module 40, so as to reduce the temperature and humidity of the regenerated air. Preferably, the port 3013-4 is formed as a substantially rectangular opening in the vertical direction, so as to be communicated with the air outlet of the vertically arranged condenser 401 in the horizontal direction.

In an embodiment of the present application, the regenerated air inlet connector 3013 may be integrally formed, or may be optionally, as shown in Fig. 12b, formed as an upper part 3013-1 and a lower part 3013-2, which are machined respectively and then formed by a welding process. In this case, the upper part 3013-1 is communicated with a shell of the condensation module 40, and the lower part 3013-2 is communicated with a condensation mounting region 503' of the lower housing of the drying device.

The regenerated air inlet connector 3013 adopts a specific shape, achieving an effect of adjusting the direction of the air duct and sealing of the air duct on the premise of ensuring the manufacturability.

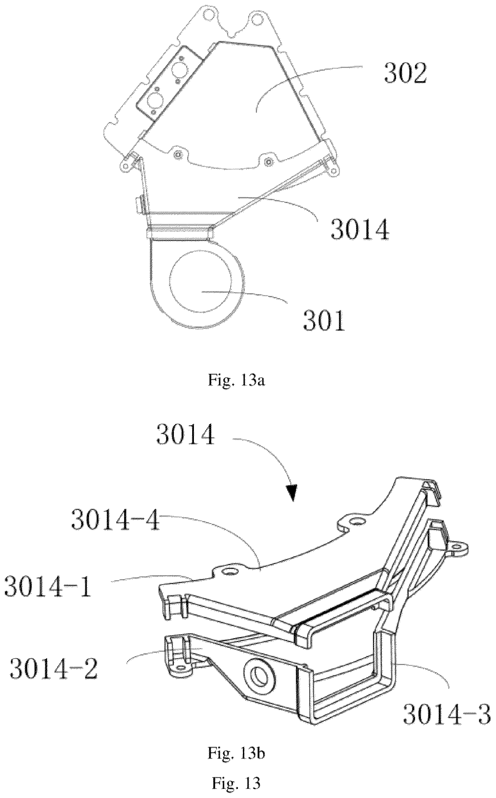

Fig. 13 shows a schematic structural diagram of the regenerated air outlet connector according to an embodiment of the present application, where Fig. 13a shows a schematic diagram of a connection structure of the regenerated air outlet connector, and Fig. 13b shows a schematic diagram of an internal structure of the regenerated air outlet connector.

Referring to Fig. 13, in an embodiment of the present application, the air outlet of the regeneration fan 301 is provided with the regenerated air outlet connector 3014, and is connected to the regeneration part 202 of the dehumidification module 20 through the regenerated air outlet connector 3014. Preferably, the regenerated air outlet connector 3014 is formed as an air duct member with two ports for ventilation in the horizontal direction, and is arranged in the same plane as the regeneration fan 301 and the dehumidification module 20, so as to occupy less space and enable the regeneration fan 301 to be more closely connected to the regeneration part 202.

The regenerated air outlet connector 3014 is preferably provided with two ports for ventilation in the horizontal direction, and the entire shape is formed as a trumpet shape gradually expanding from a smaller port to a larger port. Among them, the smaller port 3014-3 is arranged to be hermetically communicated with the regeneration fan 301 (the air outlet), and the larger port 3014-4 is arranged to be hermetically communicated with the regeneration part 202. Preferably, the opening shape of the larger port 3014-4 is matched with the shape of the regeneration part 202 to achieve hermetic communication between them. For example, in an embodiment in which the shape of the regeneration part 202 is formed as an arc shape, the larger port 3014-4 is also correspondingly formed as an arc-shaped opening.

In this way, through the hermetically communicated regenerated air outlet connector 3014, it is realized that the regeneration fan 301 outputs the low-temperature dry airflow to the regeneration part 202 (the region where the heating module 302 is located), takes away and replaces the high-temperature and high-humidity airflow generated by the regeneration part 202, thus cooling and dehumidifying the regeneration part 202, and regenerating and restoring the dehumidification function of the regeneration part 202. The high-temperature and high-humidity airflow generated by the regeneration part 202 is delivered into the atmosphere or the condenser 401 through the regenerated air outlet 3012.

In an embodiment of the present application, the regenerated air outlet connector 3014 may be integrally formed, or may be optionally, as shown in Fig. 13b, formed as an upper part 3014-1 and a lower part 3014-2, which are machined respectively and then formed by a welding process. In this case, the upper part 3014-1 is communicated with the upper housing of the regeneration part 202, and the lower part 3014-2 is communicated with the turntable mounting region 501' of the lower housing of the drying device.

The regenerated air outlet connector 3014 adopts a specific shape, achieving the effects of adjusting the direction of the air duct, expanding the pressure of the air duct and sealing of the air duct on the premise of ensuring the manufacturability.

The structure and functions of the circulation module 10 in the drying device of the present application will be described below.

As shown in Fig. 1, the circulation module 10 includes a circulation fan 101, an air inlet channel 102, a circulation air interface member 103, a first circulation housing 502 (or a circulation mounting region 502' of the lower housing of the drying device) and a second circulation housing 506. The circulation module 10 is used for sucking humid air from the washing machine container to form circulation air, and outputting the circulation air to the dehumidification module 20 for dehumidification, so as to remove moisture in the air, turn it into dry air and then return the dry air to the washing machine container.

The circulation fan 101 rotates to generate a circulation airflow. The circulation airflow is delivered to the dehumidification module 20 for a dehumidification operation through the circulation air interface member 103. In an embodiment in which the drying device is arranged horizontally, preferably, the circulation fan 101 and the dehumidification module 20 are substantially arranged in a plane, and the air inlet channel 102 is arranged in a manner of being substantially perpendicular to this plane, so as to convert the humid airflow from the container direction into the circulation airflow rotating in the plane of the dehumidification module 20 to be inputted into the dehumidification module 20.

The air inlet channel 102 is communicated with the container A and the circulation fan 101 respectively, so that the humid air in the container A of the laundry treatment apparatus enters the circulation fan 101. Preferably, when the circulation module 10 is arranged above the container A, the air inlet channel 102 is arranged in an approximately vertical direction, so that the humid air in the container A of the laundry treatment apparatus enters the circulation fan 101 from bottom to top. Furthermore, preferably, the air inlet channel 102 is connected to the washing machine container by using a flexible pipeline, such as a corrugated hose. In this way, the vibration of the washing machine container can be prevented from being transmitted to the drying device, thus avoiding causing the vibration of the drying device, as shown in Fig. 15.

The circulation air interface member 103 is arranged between the circulation fan 101 and the dehumidification module 20, and is used for communicating the circulation fan 101 and the dehumidification module 20 to form a circulation air duct between them. The circulation air interface member 103 is formed with two ports, one port of which is communicated with the air outlet of the circulation fan 101 and the other port of which is communicated with the dehumidification turntable 200. Preferably, the port communicated with the dehumidification turntable 200 is designed to be matched with the shape of the disc communicated with the dehumidification turntable 200, and to be communicated with the lower part or upper part of the dehumidification turntable 200. In this way, the circulation air outputted by the circulation fan 101 enters from the lower part or upper part of the dehumidification turntable 200, flows through the turntable 200 to the upper part or lower part of the dehumidification turntable 200, thus circularly flowing in the dehumidification part 201 inside the dehumidification turntable 200, so that the dehumidification part 201 absorbs the moisture in the circulation air.

The following describes the structural assemblies of the circulation fan 101.

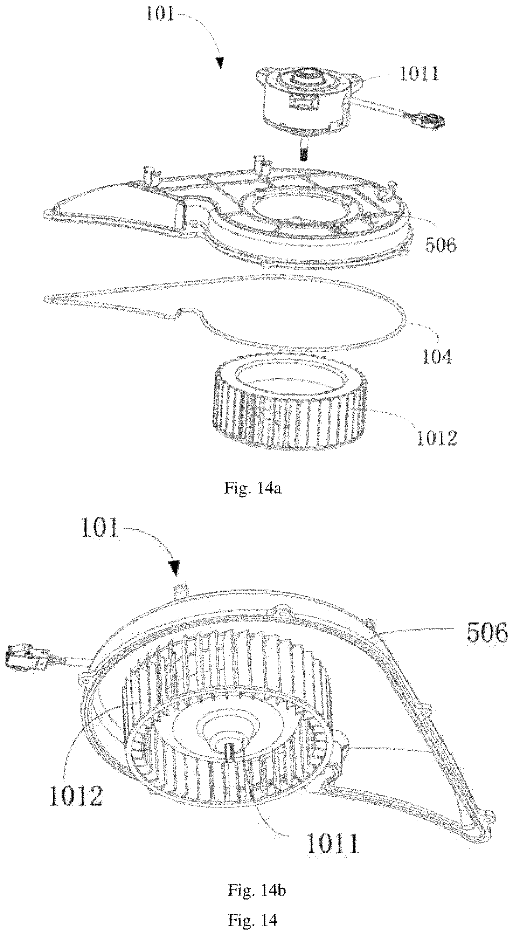

Fig. 14 shows a schematic diagram of an upper housing assembly of the circulation module of the drying device of the present application, where Fig. 14a is an exploded view of the upper housing assembly, and Fig. 14b is an assembling view of the upper housing assembly.

Referring to Fig. 14, the circulation fan 101 includes a motor 1011 and an impeller 1012.

The second circulation housing 506 is formed as a volute shape. The volute shape is as shown in Fig. 14, and there are line fixing clips and pipeline fixing clips on the volute. The volute shape is unique and meets the requirements of fluid design. As a circulation air duct, the volute shape provides an appropriate air volume and air speed for the dehumidification module 20 and guides the airflow.

The motor 1011 is used for driving the impeller 1012 to rotate at high speed to generate circulation air. The motor 1011 is fixed to the second circulation housing 506 by, for example, screws. The impeller 1012 is formed as an annular shape with a plurality of blades, and is driven by the motor to generate high-speed rotating circulation air.

Fig. 15 shows a schematic diagram of a lower housing assembly of the circulation module of the drying device of the present application.

As shown in Fig. 15, the lower housing assembly of the circulation module may be independently formed as the first circulation housing 502, or may be integrally formed as the lower housing of the drying device with the circulation mounting region 502'. The second circulation housing 506 and the lower housing assembly of the circulation module are sealed and fixed by sealing strips (Fig. 14, circulation fan sealing strip 104) and screws. At this time, the lower housing assembly of the circulation module is provided with corresponding sink grooves for fixing the sealing strips.

As shown in Fig. 15, a flexible connection, such as a corrugated pipe, is adopted between the lower housing assembly of the circulation module and the container, so as to prevent the vibration of the container from being transmitted to the rigid air inlet channel 102, and further prevent the vibration from being transmitted to the whole drying device.

Fig. 15 shows a mounting manner exemplarily, and of course, it is not limited to this. The corrugated pipe 1021 at the air inlet channel 102 is fixed to a pressing plate 1022 by positioning pins, and the pressing plate is fixed by screws to fix the corrugated pipe. The corrugated pipe forms the flexible connection between the housing of the circulation fan and the container.

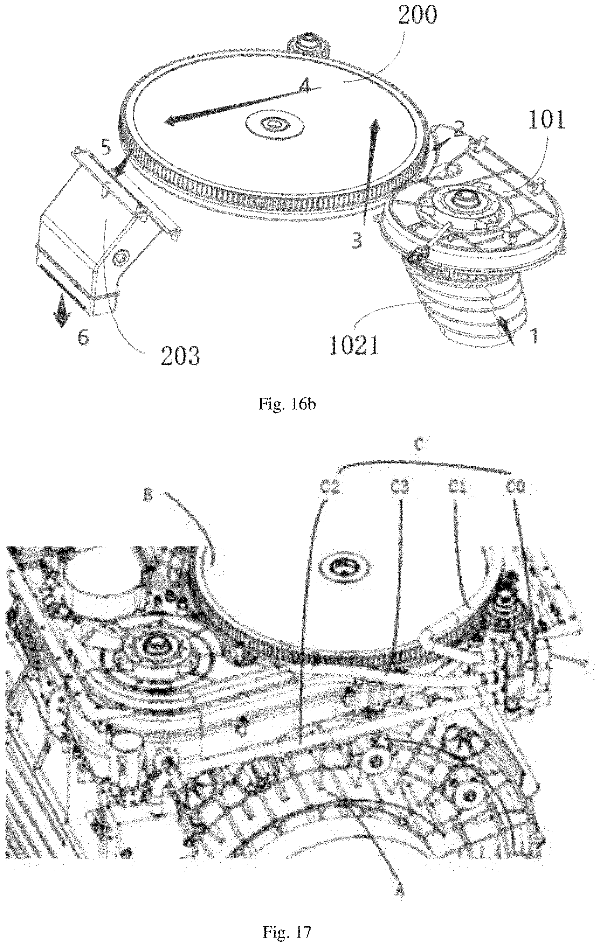

Fig. 16 shows a schematic diagram of a dehumidification circulation process of the circulation module according to an embodiment of the present application.

Referring to Fig. 16a and Fig. 16b, the circulation module 10 and the dehumidification module 20 jointly form a dehumidification circulation. A flow direction of the circulation air is indicated by arrows in Fig. 16b: the circulation airflow enters the corrugated hose from the container through the air outlet channel (with a filter screen therein) of the container (arrow 1), passes through the air inlet of the circulation fan (the air inlet channel 102), reaches from the air outlet of the circulation fan to the lower side of the dehumidification turntable 200 (arrow 2), passes through the dehumidification turntable 200 from the lower side of the dehumidification turntable 200 to the upper side of the dehumidification turntable 200 (arrow 3), flows in an upper side space of the dehumidification turntable 200 (arrow 4), to the air outlet channel 203 (arrow 5), and then passes through the connector of the air outlet channel 203 and circularly enters the container (arrow 6). The above is just an airflow example. In practice, the airflow may also pass through the air inlet of the circulation fan and through the air outlet of the circulation fan to the upper side of the dehumidification turntable, pass through the dehumidification turntable from the upper side down to the lower side, flow in the lower space to the air outlet channel, and finally circulate to the container.

Fig. 17 shows a schematic diagram of a water supply assembly of the laundry treatment apparatus of the present application.

As shown in Fig. 17, the water supply module C of the laundry treatment apparatus of the present application will be further described below. The water supply module C of the laundry treatment apparatus includes a water inlet C0, a plurality of feed water inlets (such as a container feed water inlet C1, a filter screen feed water inlet C2, a condenser feed water inlet C3, etc.), and a drainage outlet C4.

The water inlet C0 is communicated with an external water source, and is used for water supply for the whole laundry treatment apparatus through the external water source, and the water supply includes container washing water supply, filter screen self-cleaning water supply, condenser condensed water supply, or the like. The drainage outlet C4 is communicated with an external space and used for discharging wastewater generated by the laundry treatment apparatus to the outside of the machine body.

In a specific embodiment, the water inlet C0 of the water supply assembly C is connected to a tap water pipe, and the water inlet C0 is respectively communicated with three feed water inlets C1, C2 and C3, including the container feed water inlet C1 for supplying water to the washing machine container and/or a cleaning liquid box, the filter screen feed water inlet C2 for supplying water to a filter screen self-cleaning spray pipe, and the condenser feed water inlet C3 for supplying low-temperature water to the condenser and condensed water for the regeneration circulation of the drying device.

The foregoing is only an optional embodiment of the present application, but the present application is not limited to this, and fewer feed water inlets may also be arranged to simplify or combine the water supply structures and functions. For example, in case of no condenser, there is no need to arrange the condenser feed water inlet C3. Alternatively, considering that the filter screen self-cleaning water supply and condenser water supply are both for functional assemblies of the drying device, the feed water inlets for the filter screen self-cleaning water supply and the condenser water supply may be combined into one feed water inlet to reduce the structural complexity. In other cases, more than three feed water inlets may also be arranged to realize more cleaning or cooling functions, which are within a protection scope of the present application.

An electromagnetic valve switch is arranged in the above water supply assembly C, and may control the plurality of feed water inlets to be opened and closed respectively, so as to control the time to supply water to the container, the time to supply water to the cleaning liquid box, and the time to supply water for condensation or filter screen cleaning.

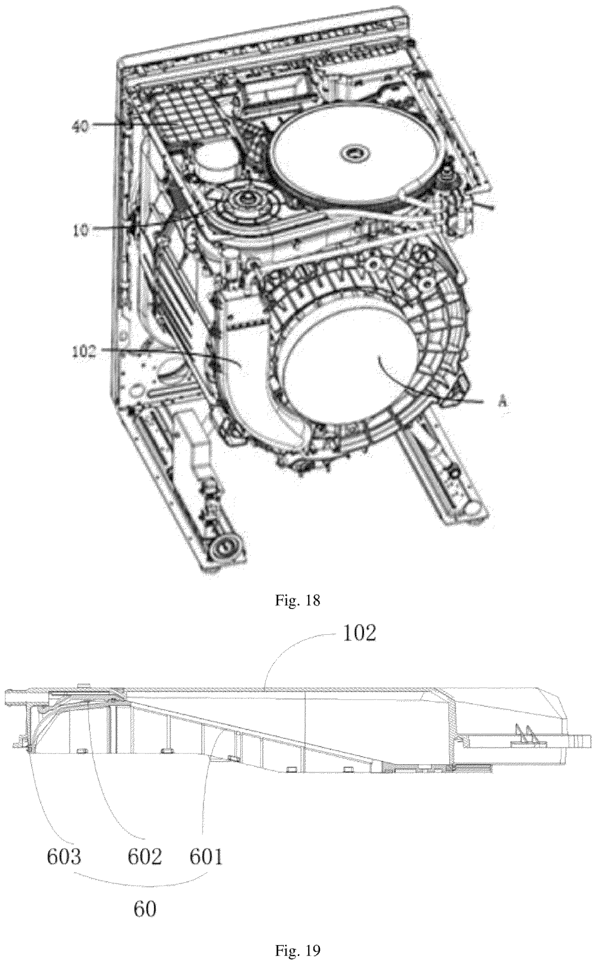

Fig. 18 shows a schematic connection diagram of the air inlet channel of the drying device of the washing machine.

As shown in Fig. 18, the air inlet channel 102 of the drying device is communicated between the circulation fan 101 and the container A. Under an action of the circulation fan, the humid air in the container is introduced to the dehumidification part 201 of the dehumidification turntable 200 for dehumidification.

In an optional embodiment of the present application, a filtering assembly 60 is arranged at an upstream position for air inlet of the circulation fan 101, preferably within the air inlet channel 102, and is used for filtering flying fluffs and impurities in the air flowing from the container to the dehumidification module 20, so as to prevent the flying fluffs or impurities from entering the dehumidification module 20, especially from entering the dehumidification turntable 200; otherwise, the dehumidification turntable 200 will be blocked to affect the dehumidification effect. Furthermore, if the flying fluffs adhered to the dehumidification turntable 200 are brought into the regeneration part during rotation, these fluffs are easy to be ignited since the regeneration part is provided with a heating module.

The internal structure of the filtering assembly 60 will be described in detail below.

Fig. 19 shows a schematic structural diagram of the filtering assembly of the present application.

As shown in Fig. 19, the filtering assembly 60 includes a filter screen 601, at least one cleaning nozzle 602, and at least one nozzle water supply pipe 603, which are sequentially arranged within the air inlet channel 102 along an air inlet direction, so that the air from the washing machine container firstly passes through the filter screen 601 to filter out fluffs and impurities contained in the air. In addition, the cleaning nozzle 602 is used for spraying cleaning water to clean the filter screen 601 and remove the fluffs or impurities adhered to the filter screen 601, thus restoring its filtering capability and continuously filtering the air from the container. The nozzle water supply pipe 603 is communicated with the filter screen feed water inlet C2 to provide clean water from the external water source to the cleaning nozzle 602.

In an optional embodiment of the present application, the filtering assembly 60 is further provided with a clean waterflow channel (not shown). The cleaning waterflow channel is preferably arranged on a side of a non-filtering surface 6012 of the filter screen 601, and is communicated with the washing machine drainage outlet C4. In this way, after coming out of the nozzle water supply pipe 603 to the nozzle, the self-cleaning waterflow flushes the filtering surface 6011 of the filter screen to wash away the fluffs and impurities adhered to the filter screen, and then flows to the washing machine drainage outlet C4 after flushing the filter screen and is discharged to the outside of the machine body. Optionally, the cleaning waterflow channel may also be independently provided with a drainage outlet C5, so that the self-cleaning waterflow is independently discharged out of the machine body of the washing machine.

Preferably, the cleaning nozzle 602 is arranged to gradually become flat from the nozzle water supply pipe 603 to the filter screen 601, and correspondingly, the width of the filter screen 601 basically covers the entire width of the air inlet channel 102, thus improving the filtering effect. Furthermore, the cleaning waterflow can cover the entire width of the filter screen 601, thus improving the self-cleaning effect of the filter screen 601.

Furthermore, optionally, the filter screen 601 is formed as an obliquely extending shape within the air inlet channel 102. On one hand, such a shape can increase a filtering area for air, so as to prevent the airflow passing efficiency from being affected once blocking occurs due to a small filtering area. On another hand, in the self-cleaning process of the filter screen, if there are some unclean places, the subsequent airflow passing efficiency will not be affected. On yet another hand, an inclination angle of the filter screen 601 may be set in a range of 0° to 80°, preferably 5° to 45°, relative to an inner wall of the air inlet channel 102, such that the self-cleaning washing area of the filter screen is correspondingly larger, thus effectively preventing fluffs or the like from being embedded into filter screen holes and being difficult to wash away.

It can be seen from Fig. 19 that the humid airflow from the container firstly passes through a surface (which may be defined as the filtering surface for intercepting the fluffs, etc.) of the filter screen, passes through the filter screen, and then continues to flow upward to the dehumidification part 201 of the dehumidification turntable 200. The self-cleaning waterflow is sprayed through the cleaning nozzle 602 after coming out of the nozzle water supply pipe 603, and flushes the filtering surface of the filter screen 601 to wash away the fluffs or the like attached to it.

In another embodiment, the cleaning nozzle 602 may be arranged on the non-filtering surface 6012 of the filter screen. In the self-cleaning process, the nozzle 602 may spray a waterflow with a certain flow speed to the filter screen against the airflow direction. That is, the waterflow with a certain impact force can be formed on the filter screen, so as to spray water to the filter screen from the non-filtering surface 6012 of the filter screen, thus washing away the fluffs attached to the filter screen.

In Fig. 19, the arrow 1 indicates a direction of the self-cleaning waterflow of the filter screen, and the arrow 2 indicates a flow direction of the humid airflow from the container. Here, the cleaning nozzle 602 is arranged in a reverse direction of the air inlet direction, so that the self-cleaning waterflow sprayed from the cleaning nozzle 602 flows in the reverse direction of the air inlet direction, which is beneficial for more thoroughly cleaning the fluffs or impurities on the filter screen 601. In the present embodiment, the self-cleaning waterflow is in the reverse direction of the air inlet direction, either along the filtering surface 6011 of the filter screen or along the non-filtering surface 6012 of the filter screen. During flushing on the filtering surface, the waterflow speed and the flow rate may be relatively lower, while during flushing on the non-filtering surface 6012, the waterflow speed and the flow rate may be relatively higher. In addition, an included angle between a waterflow direction and an extended surface of the filter screen is, for example, 40° to 90°, so as to favorably wash away the fluffs trapped in the filter holes of the filter screen.

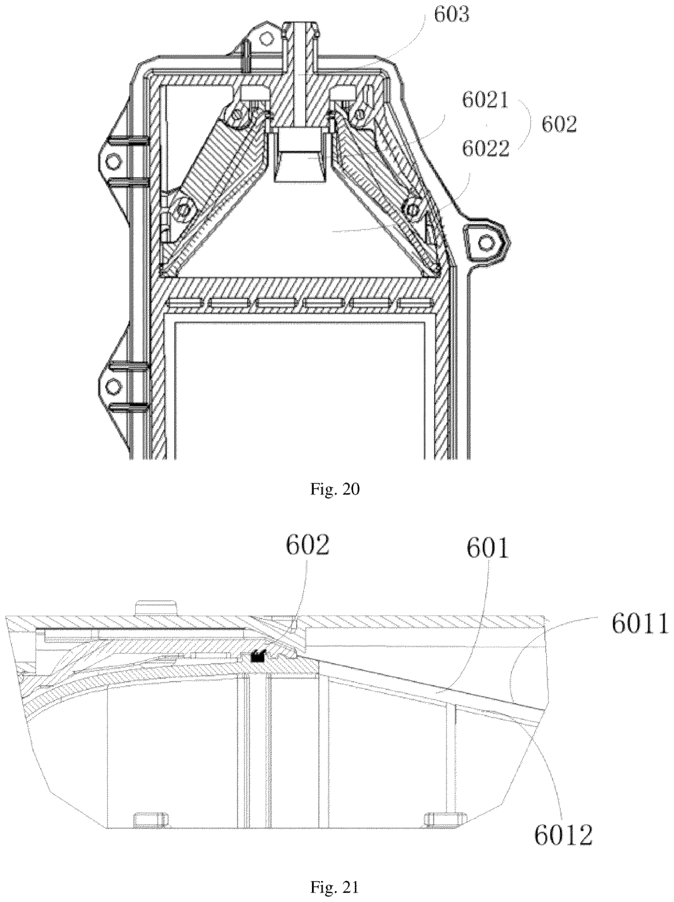

Fig. 20 shows a schematic diagram of a nozzle structure of the filtering assembly of the present application.

Referring to Fig. 20, the cleaning nozzle 602 includes a connection part 6021 connected to the nozzle water supply pipe 603, and a duckbill-shaped extension part 6022. Among them, the connection part 6021 is used for being connected to the nozzle water supply pipe 603. The extension part 6022 extends from the connection part, is gradually reduced in a height direction, and is gradually enlarged in a width direction, so as to form an approximately flat waterflow downwards.

Furthermore, preferably, the width of the extension part 6022 (water outlet) of the cleaning nozzle 602 is set to be greater than or equal to or slightly less than (for example, 90% of the width) the width of the filter screen, so as to clean the filter screen as thoroughly as possible.

Fig. 21 shows a schematic position diagram of a nozzle of the filtering assembly of the present application.

As shown in Fig. 21, the filter screen 601 is obliquely arranged along the air inlet channel 102, and the surface of the filter screen 601 facing the air inlet direction in a reverse direction is the filtering surface 6011. That is, a large amount of fluffs or impurities in the air from the container will be filtered and accumulated on a side of the filtering surface 6011. Therefore, a self-cleaning active surface of the filter screen is also preferably arranged on the filtering surface 6011 of the filter screen. To achieve this objective, the cleaning nozzle 602 is preferably arranged on a side of the filtering surface 6011 of the filter screen 601, and more preferably, is also obliquely arranged along the inclination angle of the filter screen 601. In this way, cleaning water provided by the nozzle water supply pipe 603 can be sprayed onto the filtering surface 6011 as thoroughly as possible after being sprayed from the cleaning nozzle 602.

In another embodiment, optionally, the cleaning nozzle 602 may be arranged to be opposite to two side surfaces (including the filtering surface 6011 and the non-filtering surface 6012 opposite to the filtering surface) of the filter screen 601. In this way, the two side surfaces of the filter screen can be cleaned and sprayed at the same time. More preferably, two cleaning nozzles 602 may be arranged to be opposite to the filtering surface 6011 and the non-filtering surface 6012 of the filter screen respectively, so as to clean the two side surfaces of the filter screen at the same time, and improve the cleaning efficiency and the cleaning strength. In this case, for example, it may be arranged as that one cleaning nozzle 602 firstly sprays water to clean the non-filtering surface 6012 first, and after a set time elapses, the other cleaning nozzle 602 is started to spray water to clean the filtering surface 6011, or the two nozzles are started at the same time. In this way, the cleaning effect of the filter screen can be further improved.

Preferably, the cleaning nozzle 602 is usually set to start cleaning the filter screen when the drying device stops working, so as to avoid increasing the moisture content of the air entering into the air inlet channel 102 when the cleaning nozzle sprays water to clean the filter screen, which is not conducive to the operation of the drying device. Furthermore, the cleaning nozzle 602 is set to start cleaning and spraying water before the drying device is started to work, so as to ensure that after the fluffs and impurities on the filter screen are completely removed, the air is introduced from the container to start the drying operation of the drying device. The operation time for the cleaning nozzle 602 to clean and spray water may be a preset duration. Alternatively, a detection module may be arranged to detect whether the fluffs and impurities on the filter screen 601 have been cleaned completely; and if it is detected that the filter screen 601 has been cleaned completely, the cleaning nozzle 602 is controlled to stop spraying water and cleaning.

Optionally, a cleaning water detection device is also arranged at the cleaning nozzle and used for detecting parameters such as the flow rate and flow speed of the cleaning water and the cleaning state of the filter screen and sending these parameters to the control device, so as to control the spraying or closing, spraying frequency and spraying speed of the cleaning water through the control device.

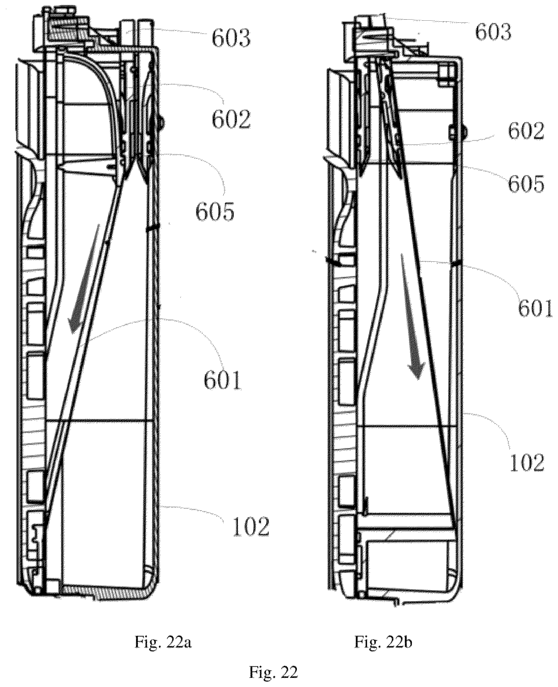

Fig. 22 shows a schematic position diagram of a condensation nozzle of the filtering assembly of the present application.

In a preferred embodiment, the filtering assembly 60 is further provided with a condensation nozzle 605, which is arranged on an outer wall of the air inlet channel 102 to spray water on the outer wall of the air inlet channel 102 for pre-condensation. The humid air of the container entering the drying device through the air inlet channel 102 contains a lot of moisture, and generally has a normal temperature or higher temperature. By pre-condensation of the humid air in the air inlet channel 102, the moisture in the circulation airflow may be condensed into liquid water in advance, and discharged out of the machine body through a preset flow channel (for example, a sleeve is arranged outside the outer wall of the air inlet channel 102 to form a condensed waterflow channel space). In this way, the moisture in the circulation airflow can be reduced in advance, the dehumidification efficiency of the drying device is improved, the dehumidification time is shortened, and energy is saved. Of course, the pre-condensation nozzle 605 may also directly inject water into the inner wall of the air inlet channel 102, so that the waterflow flows down slowly along the inner wall to ensure that the wall of the air inlet channel is maintained at a low temperature, thus condensing the airflow flowing through the air inlet channel.

In the present embodiment, a condensation action of the air inlet channel 102 for air outgoing of the container is maintain a continuous low temperature of the pipeline wall by slowly spraying water to an outer wall of a pipeline of the air inlet channel 102 through the condensation nozzle 605, thus condensing a humid and hot airflow flowing through the pipeline into water. Therefore, usually when the drying device is started to work, the condensation nozzle 605 starts to spray water for condensation operation until the laundry in the container is completely dried and the drying device stops working. Alternatively, the condensation nozzle 605 is started in the early drying stage and stopped in the later stage, because the moisture content in the airflow in the early stage is higher; by starting the pre-condensation, the moisture content in the airflow is reduced and the drying efficiency is improved.

Preferably, an outer pipe may be sleeved outside the air inlet channel 102, and the condensation nozzle 605 may be arranged between the outer pipe and the outer wall of the air inlet channel 102, so that a waterflow space is formed between the outer wall of the pipeline of the air inlet channel 102 and an inner wall of the sleeved outer pipe to guide the condensed water to be discharged out of the washing machine through an independent drainage pipeline, or to guide the condensed water to flow into the outer tub of the container to be merged with the water outlet channel of the container and discharged through the drainage pipeline of the washing machine. In this way, the water can be sprayed to the outer wall of the pipeline, and at the same time, it can be ensured that this part of condensed water is not spilled.

Optionally, a condensed water detection device is also arranged at the condensation nozzle and used for detecting the flow rate and flow speed of the condensed water and sending them to a control device, so as to control the spraying or closing, spraying speed or the like of the condensed water through the control device.

In another optional embodiment of the present application, the cleaning nozzle may not be arranged, and accordingly, a detachable filter screen 601 may be arranged in the air inlet channel 102, which is convenient for a user to disassemble and clean the filter screen 601 and then assemble it into the air inlet channel 102. In order to facilitate a user to disassemble and assemble the filter screen, preferably, a path of the air inlet channel 102 may be set to pass through a detachable box arranged on a front end panel or a side panel of the washing machine, and the filter screen 601 is arranged in the detachable box, so that the user can conveniently open this box, take out and clean the filter screen, and then put it back and close the box.

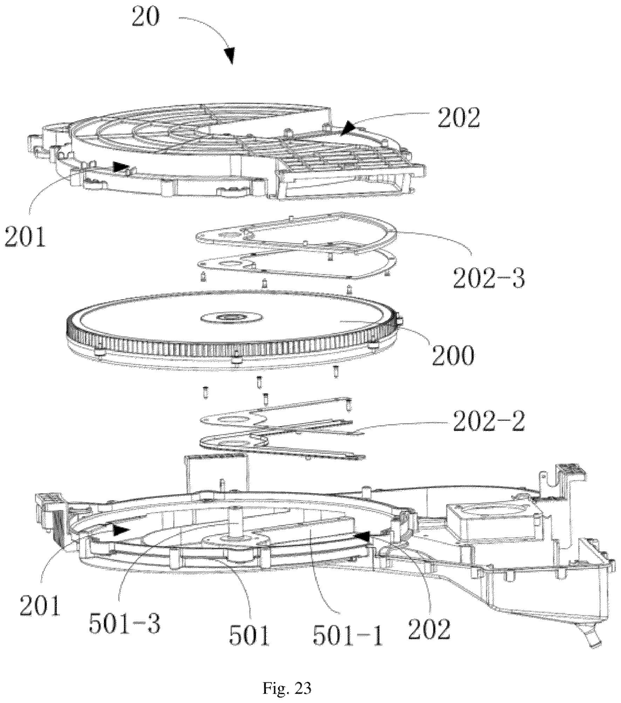

Fig. 23 shows a schematic structural diagram of the dehumidification module of the present application.

As shown in Fig. 23, a main body part of the drying device of the present application is the dehumidification module 20. The dehumidification module 20 sequentially includes a second turntable housing 505, a dehumidification turntable 200 and a first turntable housing 501 from top to bottom. The first turntable housing 501 and the second turntable housing 505 are fixed by means of buckling, bolts, gluing, etc.

Furthermore, the dehumidification module 20 includes two functional regions of the dehumidification part 201 and the regeneration part 202, which are divided and isolated by the second turntable housing 505, the first turntable housing 501 and separating members in them. Among them, the second turntable housing 505 and the first turntable housing 501 are respectively provided with a regeneration part separating member therein, so as to at least separate the internal space of the housing into two regions of the dehumidification part 201 and the regeneration part 202, and keep the two regions relatively sealed. The dehumidification turntable 200 is packaged in a closed space by the second turntable housing 505 and the first turntable housing 501, and rotated fixedly by a bearing in the center of the first turntable housing 501.

The internal space of the second turntable housing 505 corresponds to the dehumidification part 201 of the dehumidification turntable 200, and is used for the circulation air to flow. The heating module 302 arranged on the second turntable housing 505 corresponds to the regeneration part 202 of the dehumidification turntable 200, and is used for the regenerated air to flow. The first turntable housing 501 corresponds to the dehumidification part 201 and the regeneration part 202 of the dehumidification turntable 200. In the first turntable housing 501, the dehumidification part 201 and the regeneration part 202 are separated by a first housing regeneration region separating member 501-1.

Referring to Fig. 23, the housing components of the dehumidification module 20 further include a first housing regeneration region assembling member 202-2 and a second housing regeneration region assembling member 202-3, which are used for at least separating the regeneration part 202 and the dehumidification part 201 of the dehumidification turntable and keeping the two parts relatively sealed. That is, the airflow of the regeneration part 202 passes through the separating member as little as possible to the dehumidification part 201, and the airflow of the dehumidification part also passes through the separating member as little as possible to the regeneration part.

The first housing regeneration region assembling member 202-2 is connected to the first turntable housing 501 for realizing movable sealing contact between the first turntable housing 501 and the dehumidification turntable 200. Specifically, the first housing regeneration region assembling member 202-2 is preferably arranged as an upper one and a lower one, where the first housing regeneration region assembling member 202-2 close to the first turntable housing 501 is a rigid mounting member for being fixed to the first turntable housing 501, and the first housing regeneration region assembling member 202-2 close to the dehumidification turntable 200 is a flexible sealing member for being in movable sealing contact with the dehumidification turntable 200. Of course, the above rigid mounting part and flexible sealing member may be interchanged in position, depending on how they are mounted. The first housing regeneration region assembling member 202-2 is formed in a shape matched with a region corresponding to the regeneration part 202, such as a fan shape, so as to be fixed onto the first housing regeneration region separating member 501-1 of the first turntable housing 501, and jointly and hermetically define the space of the regeneration part 202 together with the first housing regeneration region separating member 501-1.

The second housing regeneration region assembling member 202-3 is connected to the second turntable housing 505 for realizing movable sealing contact between the second turntable housing 505 and the dehumidification turntable 200. Specifically, the second housing regeneration region assembling member 202-3 is preferably arranged as an upper one and a lower one, where the second housing regeneration region assembling member 202-3 close to the second turntable housing 505 is a rigid mounting member for fixing the second turntable housing 505, and the second housing regeneration region assembling member 202-3 close to the dehumidification turntable 200 is a flexible sealing member for being in movable sealing contact with the dehumidification turntable 200. The second housing regeneration region assembling member 202-3 is formed in a shape matched with the region corresponding to the regeneration part 202, such as a fan shape, so as to be fixed onto the second housing regeneration region separating member 505-3 of the second turntable housing 505, and jointly and hermetically define the space of the regeneration part 202 together with the second housing regeneration region separating member 505-3. In addition, the heating module 302 is fixed to a fan-shaped notch region (a region corresponding to the regeneration part 202) of a disc plane where the second turntable housing 505 is located, and forms heat sealing with the second turntable housing 505 through a heat sealing member.

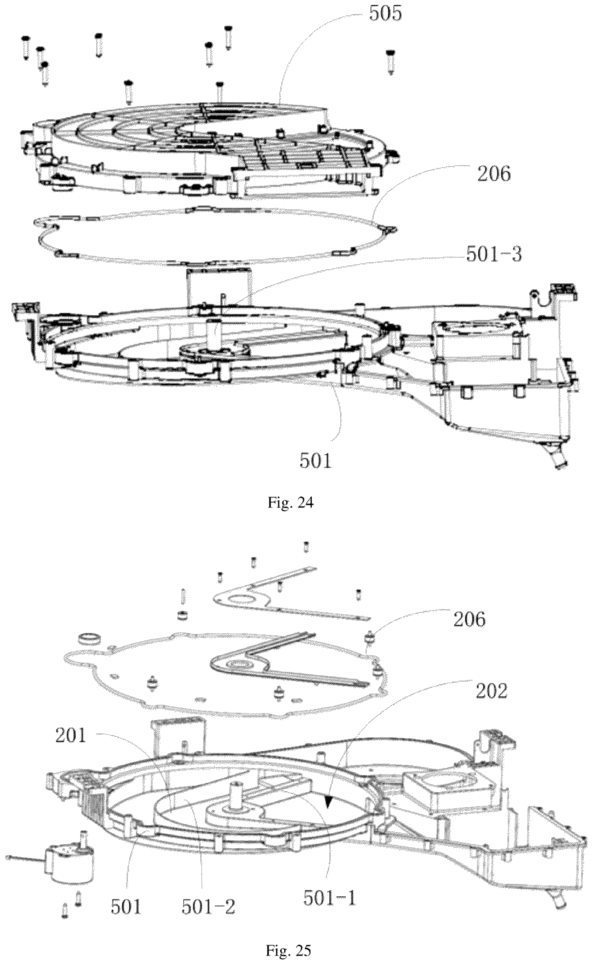

Fig. 24 shows an exploded structural diagram of a sealing package of the dehumidification module.

As shown in Fig. 24, in an embodiment of the present application, the second turntable housing 505 and the first turntable housing 501 are hermetically and fixedly connected to each other, so as to hermetically package the dehumidification turntable 200 inside. For example, the sealing connection between the second turntable housing 505 and the first turntable housing 501 is realized by a housing sealing ring 206 made of soft rubber.

Optionally, the housing sealing ring 206 is a rubber pad or a silica gel pad, and is connected to its upper housing and lower housing by means of fixing with metal pressing sheets plus screws. Specifically, turntable parts (the parts connected to the dehumidification turntable 200) of the second turntable housing 505 and the first turntable housing 501 are provided with mounting grooves for the sealing rings 5; and the second turntable housing 505 and the first turntable housing 501 are buckled and then fastened by bolts to seal the whole turntable region.

Fig. 25 shows a schematic structural diagram of the lower housing of the dehumidification module of the present application.

As shown in Fig. 25, the first turntable housing 501 of the dehumidification module is communicated with the circulation fan 101. The circulation air (humid airflow) enters a space (a space defined by the first turntable housing 501) below the dehumidification turntable 200 through an opening of the first turntable housing 501 for circularly flowing, and then passes through the dehumidification turntable 200 upward for convection to a space (a space defined by the second turntable housing 505) above the dehumidification turntable 200, thus the humid circulation air passes through the dehumidification turntable in the region of the dehumidification part 201 to be dehydrated and dried.

The first turntable housing 501 is provided with at least two first housing regeneration region separating members 501-1 (the regeneration part separating members) and at least one first housing dehumidification region separating member 501-2 (the dehumidification part separating member). The first housing regeneration region separating member 501-1 is formed in the region corresponding to the regeneration part 202 of the first turntable housing 501, and is formed in a relatively smaller fan shape to at least separate the regeneration part 202 from the dehumidification part 201 in the first turntable housing 501 and maintaining relative sealing between the regeneration part 202 and the dehumidification part 201. The first housing dehumidification region separating member 501-2 (the dehumidification part separating member) is formed in the region corresponding to the dehumidification part 201 of the first turntable housing 501, and is formed in a relatively larger fan shape to separate the region of the dehumidification part 201 in the first turntable housing 501 into at least two parts along a circumferential direction of the turntable, for separating the circulation airflow in the region of the dehumidification part 201. Through the dehumidification part separating member, the circulation airflow enters a space of the dehumidification turntable and the first turntable housing 501 from the circulation fan, and is then separated into at least two parts, so as to avoid affecting the moisture absorption efficiency due to the fact that the centrifugal force of the airflow only acts on a larger diameter position of the dehumidification turntable and the airflow in a position close to a circle center is small.

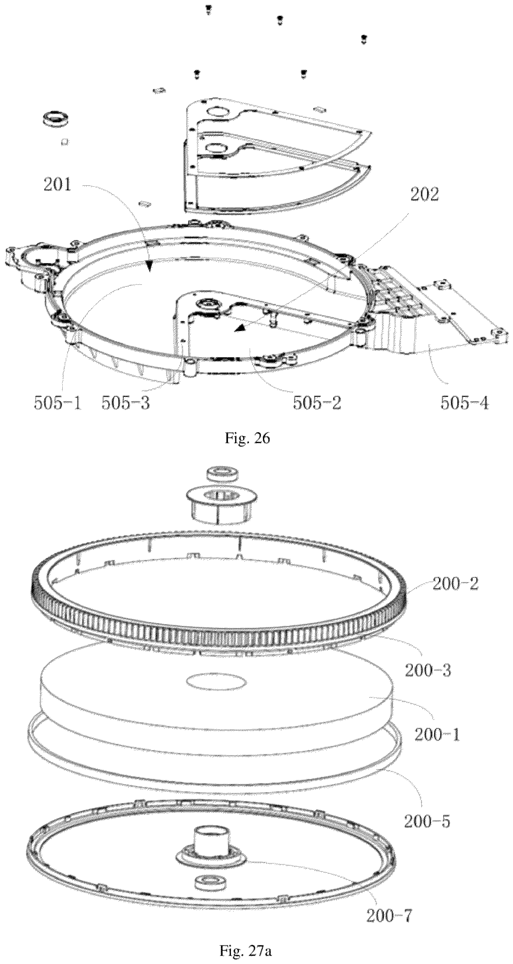

Fig. 26 shows a schematic structural diagram of the second turntable housing of the present application.

The second turntable housing 505 is formed in a disc shape corresponding to the dehumidification turntable 200, and includes a second housing dehumidification region 505-1 (corresponding to the dehumidification part 201 of the dehumidification module) and a second housing regeneration region 505-2 (corresponding to the regeneration part 202 of the dehumidification module) which are separated from each other. A second housing regeneration region separating member 505-3 is arranged in the second turntable housing 505, and is used for separating the second housing dehumidification region 505-1 (corresponding to the dehumidification part 201 of the dehumidification module) from the second housing regeneration region 505-2 and keeping them relatively sealed. In addition, a circulation air outlet 505-4 is provided on a circumferential outer side of the second turntable housing 505, is connected to the air outlet channel 203, and is arranged to communicate the dehumidification module 20 with the container A for a dry circulation airflow after dehumidification to flow into the container A to dry the laundry in the container A.

In another embodiment, the first housing regeneration region separating member 501-1 and the second housing regeneration region separating member 505-3 are alternatively or both provided with a sealing member; and the sealing member may be spaced apart from or interfered with the turntable 200 to ensure the air tightness between the dehumidification part 201 and the regeneration part 202 during the rotation of the turntable 200. For example, a sealing hair strip may be fixedly arranged on the first housing regeneration region separating member 501-1, and there is no sealing member arranged on the second housing regeneration region separating member 505-3, so that the sealing hair strip can interfere with the turntable 200, and there is a gap of, for example, 0.2 to 5 mm between an end surface of the second housing regeneration region separating member 505-3 and the turntable 200. Alternatively, the sealing hair strips that interfere with the turntable 200 may be arranged both on the first housing regeneration region separating member 501-1 and the second housing regeneration region separating member 505-3. Alternatively, the first housing regeneration region separating member 501-1 and the second housing regeneration region separating member 505-3 are both provided with sealing soft glues or no sealing members, but a gap between the sealing soft glue or the end surface of the separating member and the turntable 200 is kept within a range of 0.2 to 5mm to ensure the sealing performance as much as possible.

Referring to Fig. 1 and Fig. 26, a separated heating module 302 is arranged in the second housing regeneration region 505-2 of the second turntable housing 505. A body of the heating module 302 is arranged separately from the second turntable housing 505, and a lower end surface of the heating module 302 is communicated with the second turntable housing 505 to form a convection space for the regenerated air. Preferably, the heating module 302 is arranged in a disc plane where the second turntable housing 505 is located, so as to reduce the overall height of the dehumidification module 20. As shown in Fig. 1 and Fig. 26, the second turntable housing 505 is formed in a disc shape, a relatively smaller part of which accommodates the separated heating module 302. A heater air inlet 302-1 is provided on the periphery of the heating module 30 and communicated with the regeneration fan 301 for receiving the dry regenerated air from the regeneration fan 301 and heating the dry regenerated air into high-temperature dry regenerated air. The heating module 302 has a heater air outlet 302-2 on a lower end surface of the fan-shaped surface, which is communicated with the second turntable housing 505 for outputting the high-temperature dry regenerated air to the regeneration part 202 of the dehumidification turntable 200, so as to remove the moisture in the dehumidification turntable 200 in the region of the regeneration part 202.

The heating module 302 on the second turntable housing 505 is communicated with the regeneration fan 301. The regenerated air enters an internal space of the heating module 302 through the heater air inlet 302-1 of the heating module 302, passes through the heater air outlet 302-2, then passes through the heating module 302 downward to be heated, and circularly flows to a space below the dehumidification turntable 200 (the space defined by the first turntable housing 501) by convection through the dehumidification turntable 200, thereby drying and dehydrating the dehumidification turntable in the region of the regeneration part 202.

In an optional embodiment, the air outlet of the regeneration fan is communicated with a side surface air inlet of the heating module 302 for blowing into the regenerated airflow from a direction substantially perpendicular to a radius of the substantially fan-shaped heating module 302.

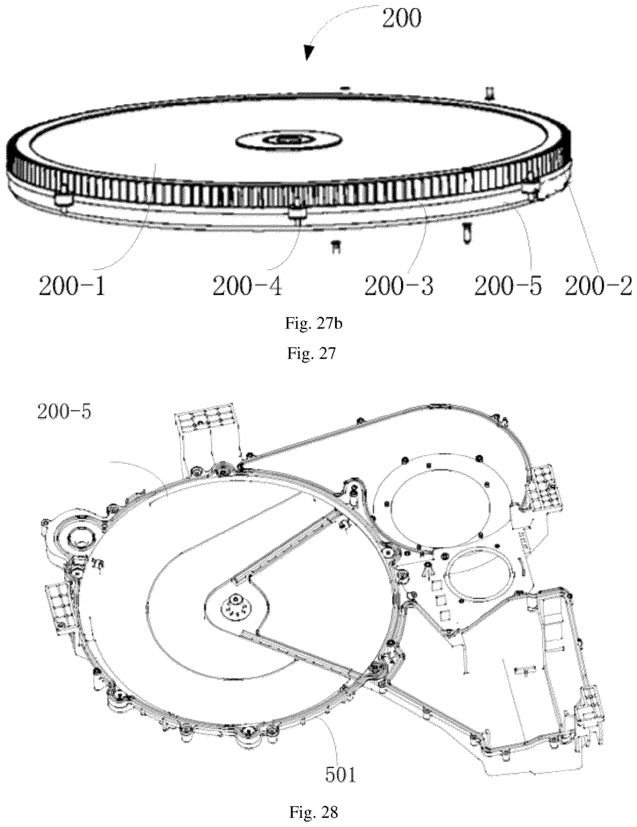

Fig. 27 shows a schematic diagram of an internal structure of the dehumidification turntable of the drying device of the present application.

Fig. 27a is an exploded schematic structural diagram of the dehumidification turntable, and Fig. 27b is a schematic diagram of an assembling structure of the dehumidification turntable.

As shown in Fig. 27, the dehumidification turntable 200 includes a molecular sieve 200-1, a driving wheel 200-2, an auxiliary rotating ring 200-3 and a sealing ring 200-5. Among them, the molecular sieve 200-1 is formed in a central region of the dehumidification turntable 200. The driving wheel 200-2, the auxiliary rotating ring 200-3 and the turntable sealing ring 200-5 are arranged in parallel on the periphery of the molecular sieve along a thickness direction of the molecular sieve 200-1.

The driving wheel 200-2 is arranged to surround the molecular sieve 200-1, provided with driving teeth on the outer side of the circumference for being in driving fit with a driving motor to drive the molecular sieve 200-1 to rotate under driving of the motor.

The auxiliary rotating ring 200-3 is arranged below the driving wheel 200-2 and to surround the molecular sieve 200-1, and is used for being in contact with and rolling relative to a flexible roller 200-4 to assist smooth rotation of the molecular sieve 200-1. Specifically, the auxiliary rotating ring 200-3 is used for rolling fit with at least one flexible roller 200-4 arranged inside the turntable housing, and is used for assisting normal rotation of the dehumidification turntable and reducing the friction force.

Preferably, the dehumidification module 20 is further provided with at least one flexible roller 200-4, which is arranged at the inner side of the turntable housing and is in rolling contact with the auxiliary rotating ring 200-3, for assisting normal rotation of the dehumidification turntable and reducing the friction force. Preferably, the flexible roller 200-4 is flexible and deformable. When the dehumidification turntable is offset from a rotating shaft, the auxiliary rotating ring 200-3 may compress the flexible roller 200-4 to deform, without generating a friction force when the turntable rotates due to pressing between the auxiliary rotating ring and the flexible roller 200-4.

Optionally, a turntable detection device may be arranged at the dehumidification turntable, and is used for monitoring a rotating speed of the dehumidification turntable and sending the rotating speed to the control device, so as to ensure that the dehumidification turntable keeps rotating continuously duration drying operation and prevent from burning the dehumidification turntable up due to the heating module continuously heating one region.

The turntable sealing ring 200-5 is arranged below the auxiliary rotating ring 200-3 and surrounds the molecular sieve 200-1, and is used for realizing rotatable sealing between the dehumidification turntable 200 and the turntable housing. The turntable sealing ring 200-5 may be made of a soft and deformable material, especially a material that is corrosion-resistant and does not expand excessively due to water absorption, such as a hair strip, foam and soft rubber. After the dehumidification turntable 200 is mounted to the turntable housing, the size of the turntable sealing ring 200-5 is formed to have certain space overlapping with an inner wall of the turntable housing, so that the interference fit between the turntable sealing ring 200-5 and the inner wall of the turntable housing is realized, and a rotatable sealing contact effect is realized under the action of elastic deformation of the turntable sealing ring 200-5. Therefore, the circulation airflow can be prevented from passing through a gap between the dehumidification turntable 200 and a turntable shell, thus ensuring that the humid airflow from the washing machine container mostly passes through the dehumidification turntable to be subjected to moisture absorption, without leaking from a gap between the periphery of the dehumidification turntable and the turntable shell.

Of course, a parallel order of the above driving wheel 200-2, auxiliary rotating ring 200-3 and sealing ring 200-5 is selectable. Since the above three parts realize different functions respectively, it is only necessary to ensure that the above three parts are arranged in parallel, and the specific arrangement order is not limited.

Fig. 28 shows a schematic structural diagram of a sealing ring arranged in the first turntable housing.

As shown in Fig. 28, in another optional embodiment, the turntable sealing ring 200-5 may also be fixedly arranged on the first turntable housing 501, and the size of the turntable sealing ring 200-5 is formed to have certain space overlapping with the periphery of the dehumidification turntable 200, so as to realize the interference fit between the turntable sealing ring 200-5 and the periphery of the dehumidification turntable 200, for the same reason as above. In this case, the turntable sealing ring 200-5 is arranged on the periphery of the joint between the first turntable housing 501 and the second turntable housing 505, to seal the joint between the upper housing and the lower housing of the turntable on one hand and rotationally seal the dehumidification turntable 200 on the other hand.

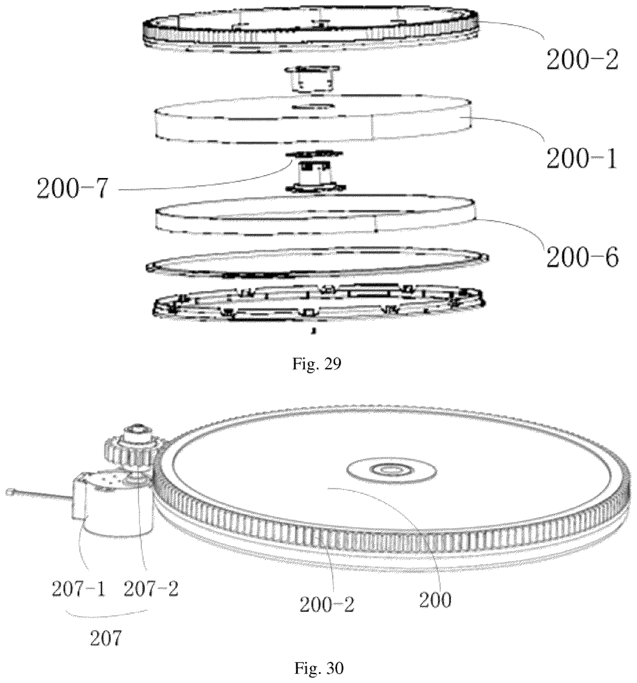

Fig. 29 shows a schematic diagram of a damping structure of the dehumidification turntable.

As shown in Fig. 29, the molecular sieve 200-1 of the dehumidification turntable 200 has relatively fragile material characteristics, and is easily damaged due to vibration of the washing machine or collision with the housing during rotation. Therefore, in order to minimize the vibration of the molecular sieve 200-1 and avoid the vibration damage to it, it is necessary to perform damping treatment on the molecular sieve 200-1.

In an embodiment of the present application, the damping structure of the molecular sieve 200-1 includes a circumferential damping member 200-6 and/or a central damping member 200-7, which are respectively described in detail below.

The circumferential damping member 200-6 is made of a flexible material, such as foam, and is arranged between the molecular sieve 200-1 and the driving wheel 200-2 and surrounds the periphery of the molecular sieve 200-1, so that buffering is formed between an outer ring of the molecular sieve 200-1 and inner rings of the first turntable housing 501 and the second turntable housing 505, such that the molecular sieve is prevented from being damaged due to collision with the housing during the rotation.

Referring to Fig. 29, the dehumidification turntable 200 has a central hole, is correspondingly sleeved on a rotating shaft 501-3 in the center of the first turntable housing 501 and rotates around the rotating shaft 501-3 as a central shaft.

The central damping member 200-7 is formed in an annular shape, is arranged between the molecular sieve 200-1 and the first turntable housing 501, and is sleeved on the rotating shaft 501-3 of the first turntable housing 501, so as to form vibration damping between the molecular sieve 200-1 and the first turntable housing 501. The first turntable housing 501 is usually directly connected (rigidly connected or flexibly connected) with to washing machine frame, and the vibration of the washing machine is easily transmitted to the first turntable housing 501. Therefore, the damage of the vibration from the first turntable housing 501 to the molecular sieve 200-1 can be effectively buffered by the above central damping member 200-7, while clamping and fixing effects can also be enhanced.

It should be noted that the circumferential damping and/or the end surface damping of the molecular sieve 200-1 do not need to be set at the same time. Only one damping structure may be arranged if one damping structure of them can achieve an expected damping effect.

The molecular sieve 200-1 of the dehumidification turntable 200 is made of a hygroscopic material, and material properties such as water adsorption capacity, water evaporation capacity, sterilization and mechanical stability need to be comprehensively considered. Optionally, the molecular sieve 200-1 of the present application may be made of one of the following materials: lithium chloride, silica gel, modified silica gel, zeolite, activated alumina and 13X (sodium X type) molecular sieve.

In an embodiment of the present application, the dehumidification module 20 is further provided with a driving device, which includes the driving motor and a transmission component and is used for driving the dehumidification turntable 200 to rotate.

The driving device 207 may be classified into a peripheral driving device 207 or a central driving device 208 according to different mounting positions and different driving manners, which are respectively described in detail below.

Fig. 30 shows a schematic structural diagram of the peripheral driving device of the dehumidification turntable according to an embodiment of the present application.

As shown in Fig. 30, the peripheral driving device 207 includes a peripheral driving motor 207-1 and a peripheral transmission gear 207-2. The peripheral driving device 207 is rotatably arranged on the periphery of the dehumidification turntable 200, and is used for driving the dehumidification turntable 200 to rotate in a peripheral driving manner.

In the case of the peripheral driving manner, the gear-shaped driving wheel 200-2 is sleeved on the periphery of the dehumidification turntable 200. The peripheral driving gear 207-2 is preferably sleeved on a power shaft of the peripheral driving motor 207-1, and is arranged to be rotatably engaged with the gear of the driving wheel 200-2, so as to drive the dehumidification turntable 200 to rotate under drive of the peripheral driving motor 207-1.

Optionally, the driving motor 207-1, the peripheral transmission gear 207-2 and the driving wheel 200-2 may also be in transmission connection with each other through transmission belts such as a rack and pinion, a pulley belt, etc., instead of direct contact connection.

The central driving device 208 (not shown) is rotatably provided in the center of the dehumidification turntable 200 and used for driving the dehumidification turntable 200 to rotate in a central driving manner. The central driving device 208 includes a central driving motor 208-1 and a central transmission shaft 208-2.

In the case of the central driving manner, the periphery of the dehumidification turntable 200 may not be sleeved with the gear-shaped driving wheel 200-2, but the central transmission shaft 208-2 is fixedly connected to the center of the dehumidification turntable 200, to drive the dehumidification turntable 200 to rotate under drive of the central driving motor 208-1. Optionally, an external gear may be fixedly arranged on the central transmission shaft 208-2, an internal gear may be arranged within a central hole of the dehumidification turntable 200. The internal gear and the external gear are closely engaged with each other, so that the central driving motor 208-1 is in transmission with the dehumidification turntable 200 through the central transmission shaft 208-2.

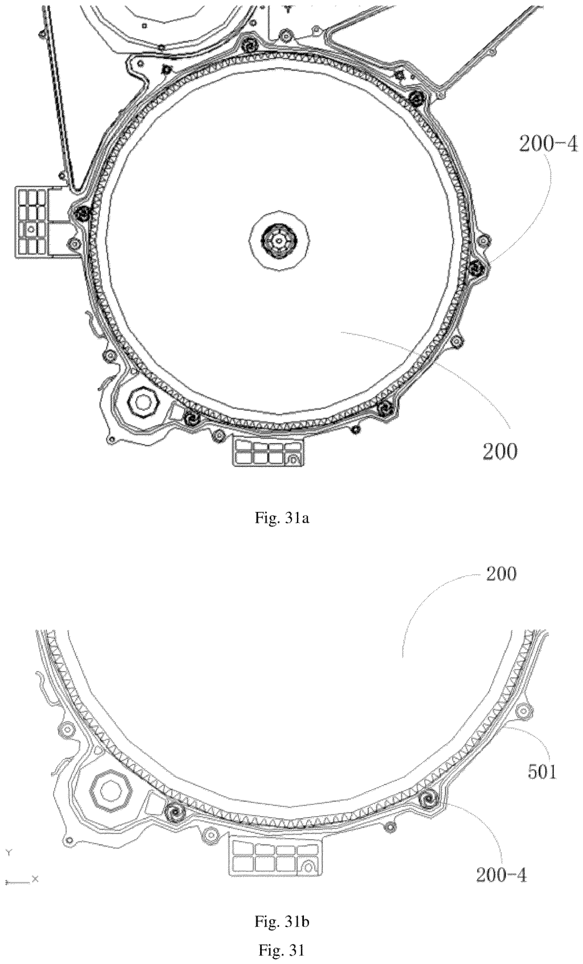

Fig. 31 shows a schematic structural diagram of the flexible roller of the dehumidification module according to an embodiment of the present application.

Referring to Fig. 31a and Fig. 31b, at least one flexible roller 200-4 is arranged on a peripheral edge of the dehumidification turntable 200 to assist normal movement (rotation or motion) of the dehumidification turntable and reduce the friction force. Preferably, the flexible roller 200-4 is arranged at the inner side of the turntable housing and in rolling contact with the auxiliary rotating ring 200-3, for example, arranged on the mounting part protruding outward from the inner ring of the first turntable housing 501. A plurality of flexible rollers 200-4 are arranged on an inner wall surface of the turntable housing, and the dehumidification turntable 200 is in direct contact with the plurality of flexible rollers 200-4, so that the position of the dehumidification turntable 200 can be kept from being excessively offset during movement.

Preferably, the flexible roller 200-4 is formed to be flexible and deformable. When the dehumidification turntable is offset from a rotating shaft or a moving track, the auxiliary rotating ring 200-3 may compress the flexible roller 200-4 to deform, without generating a friction force when the turntable rotates due to pressing between the auxiliary rotating ring 200-3 and the flexible roller 200-4. The diameter of the flexible roller 200-4 is variable, or the position of the rotation center of the flexible roller 200-4 is adjustable, so that a distance between a contact point between the flexible roller 200-4 and the turntable housing and the rotation center of the dehumidification turntable 200 is adjustable.

In this way, when the flexible roller 200-4 is pressed against the turntable housing, a distance between a pressing point and the rotating shaft of the flexible roller 200-4 is variable. On one hand, the sliding friction between the whole dehumidification turntable 200 and the inner ring of the turntable housing during movement can be eliminated; and on the other hand, the variable diameter of the flexible roller 200-4 can reduce the collision impact with the inner ring of the turntable housing due to uneven rotation of the dehumidification turntable 200, and reduce the damage to the dehumidification turntable 200 due to the impact on the dehumidification turntable 200.

There are preferably six flexible rollers 200-4, which are evenly distributed along the outer circumference of the dehumidification turntable 200. Of course, the present application is not limited thereto, and other numbers may be set according to actual needs.

In another optional embodiment, regardless of whether the flexible roller 200-4 is provided or not, a roller track or a track groove (not shown) may be arranged on the turntable housing. The track groove may restrict the dehumidification turntable 200 towards the center or at the surrounding direction, so that the dehumidification turntable 200 can be more stably maintained at a preset position.

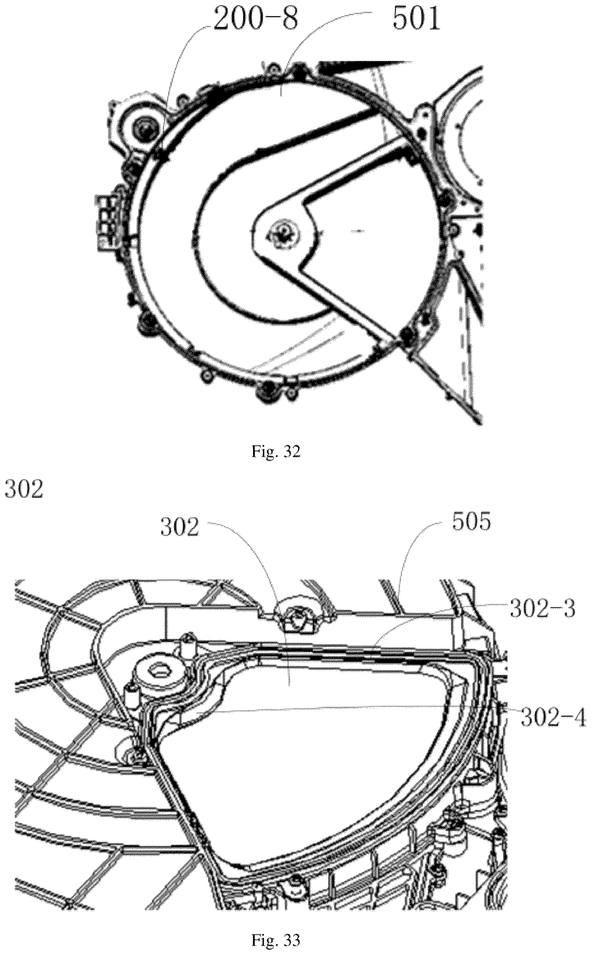

Fig. 32 shows a schematic structural diagram of an auxiliary roller of the dehumidification module according to an embodiment of the present application.

As shown in Fig. 32, at an outermost edge of a bottom surface in the first turntable housing 501, one or more auxiliary rollers 200-8 are also arranged between the first turntable housing 501 and the dehumidification turntable 200, for eliminating the friction between the dehumidification turntable 200 and the first turntable housing 501 during the movement of the dehumidification turntable 200.

Preferably, the auxiliary roller 200-8 is formed as a non-deformable rigid roller, and has a constant diameter during movement.

Fig. 33 shows a schematic diagram of a sealing structure of the heating module of the drying device of the present application.

As shown in Fig. 33, the heating module 302 is provided in the second housing regeneration region 505-2 of the second turntable housing 505, and is provided separately from the second turntable housing 505.

The heating module 302 and the second turntable housing 505 are preferably isolated and sealed by a thermal isolation material. Specifically, a first sealing member 302-3 is arranged between the heating module 302 and the second turntable housing 505, is arranged along an outer contour of the heating module 302, and is preferably made of a thermal isolation or thermal insulation material to isolate heat conduction between the heating module 302 and the second turntable housing 505.

On the first sealing member 302-3, optionally, there is further provided a second sealing member 302-4 for thermal insulation and collision buffering between the heating module 302 and the second turntable housing 505. The second sealing member 302-4 is preferably made of a modifiable colloid material, such as foam, silica gel or soft glue, cladding on the first sealing member 302-3, and is arranged along the outer contour of the heating module 302 for fixing and thermal isolation, and at the same time buffering the contact collision between the heating module 302 and the second turntable housing 505.

Since the temperature of the heating module is very high, if the heating module is in direct contact with the second turntable housing 505 for a long time, the second turntable housing 505 will deform or be burnt up. The first sealing member 302-3 and the second sealing member 302-4 are arranged between the second turntable housing 505 and the heating module 302, thus forming a temperature transfer buffering region.

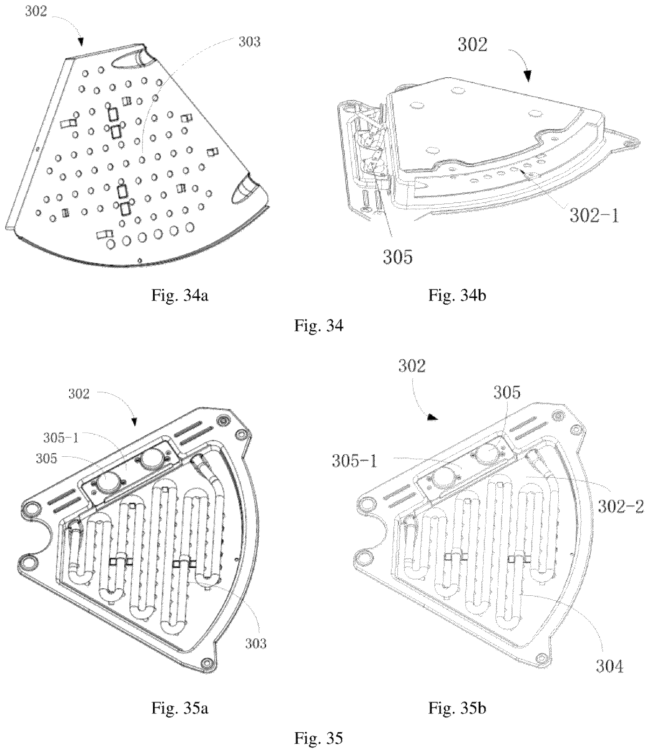

Fig. 34 shows a schematic structural diagram of a mesh plate of the heating module of the drying device of the present application, where Fig. 34a shows a schematic structural diagram of the mesh plate as an air outlet of the heating module, and Fig. 34b shows a schematic structural diagram of an air inlet of the heating module.

As shown in Fig. 34, the second turntable housing 505 is formed in a disc shape, in which a small part of fan-shaped region accommodates the separated heating module 302. A heater air inlet 302-1 is provided on the periphery of the heating module 302, communicated with the regeneration fan 301, and used for receiving the dry regenerated air from the regeneration fan 301 and heating the dry regenerated air into high-temperature dry regenerated air. A heater air outlet 302-2 is provided on a lower end surface of the fan-shaped surface of the heating module 302, communicated with the second turntable housing 505, and used for outputting the high-temperature dry regenerated air to the regeneration part 202 of the dehumidification turntable 200. The high-temperature dry regenerated air circularly flows to a space below the dehumidification turntable 200 (a space defined by the first turntable housing 501) by convection through the dehumidification turntable 200 and flows circularly, thus drying and dehydrating the dehumidification turntable in the region of the regeneration part 202.

In this optional embodiment, the heating module 302 is formed in a fan-shaped structure, including an upper wall, a lower wall and a space formed by two sidewalls along a radius direction. The heating module 302 includes a mesh plate 303 arranged at the heater air outlet 302-2, a heater 304 located below the mesh plate 303, and a thermostat 305 extending outward from one sidewall of the lower wall.

The heating module 302 is communicated with the regeneration fan 301. The regenerated air enters an internal space of the heating module 302 through the heater air inlet 302-1 of the heating module 302, blows through the mesh plate 303 through the heater air outlet 302-2, then blows down through the heater 304 from air holes of the mesh plate 303, and flows to the turntable part of the regeneration part after being heated by the heater 304, thus resulting in the effects of heating and desorbing the moisture of the turntable part of the regeneration part.

Preferably, an arrangement shape of the plurality of air holes of the mesh plate 303 may be consistent with the shape of the heater 304, so that most or all of the air passing through the mesh plate 303 can pass through the heater 304, thus avoiding reduction of the efficiency of the heating module due to the fact that air is not heated.

The diameters of the plurality of air holes of the mesh plate 303 are preferably set to gradually decrease or be in a decreasing trend along a direction from the periphery of the heating module 302 towards the central of the heating module 302. This is because the regenerated air enters from the heater air inlet 302-1 on the periphery of the heating module 302 at high air speed, the regenerated air is easier to pass through the air holes when the diameters of the air holes are relatively larger. At a central position close to the heating module 302, a space of the heating module 302 gradually narrows, the air speed slows down, and the regenerated air is easier to pass through the air holes as much as possible when the diameters of the air holes are relatively smaller.

Fig. 35 shows a schematic structural diagram of a heater of the heating module of the drying device of the present application, where Fig. 35a is a schematic diagram of the relative position between the heater and the mesh plate, and Fig. 35b is a structural diagram of the layout of the heater.

As shown in Fig. 35, the heater 304 is arranged on an air outlet path of the air holes of the mesh plate 303, and generally covers most or all of the air holes. Furthermore, the heater is kept a predetermined distance from the mesh plate; that is, the heater is arranged adjacent to the mesh plate 303, so that the air coming out of the air holes is heated uniformly, and at the same time, the heater will not cause excessive resistance to the air passing through the air holes.

Preferably, the heater 304 is arranged directly below the air holes and slightly offset to a radius extension direction of the heating module. In this way, when the air blowing inward along a radius of the heating module and passes through the air holes, the air will be in a speed in a radial direction indicated by an arrow. Therefore, by setting a small offset, the air passing through air holes can directly face the heater, thus improving the heating efficiency of the heater for the airflow.

As shown in Fig. 35b, one sidewall of the heating module 302 extends outward to be provided with a thermostat mounting part, in which the thermostat 305 is mounted to monitor a temperature of the heater or a temperature of an airflow flowing out of the mesh plate 17.

Preferably, one heat conduction sheet 305-1 is arranged on the thermostat mounting part, and then the thermostat 305 is arranged within the heat conduction sheet. That is, the heat conduction sheet 305-1 covers the thermostat 305, so that the temperature of the heater is firstly conducted to the heat conduction sheet 305-1 by means of heat conduction, and the thermostat 305 directly detects the temperature of the heat conduction sheet 305-1, thus stably monitoring air temperature in the heating module. The advantage is that since the air with heat forms a turbulence or turbulent flow in the space of the heating module, resulting in unstable temperature in this region, if the heat conduction sheet 305-1 is not arranged, the temperature detected by the thermostat 305 will be fluctuating and very unstable, which is not conducive to effective control on the heater 304.

Optionally, the thermostat 305 is connected to the control device, through which the heating power and duration of the heater, and rotating speeds of the regeneration fan and the dehumidification turntable, or the like are controlled, so as to realize accurate temperature control during an initial heating period and a temperature duration period.

Referring to Fig. 1, the drying device B is provided with the condensation module 40 downstream of the regeneration module 30, and the regenerated air outlet 3012 of the regeneration module 30 is communicated with the condenser air inlet 405 of the condensation module 40, for inputting the high-temperature and high-humidity regenerated airflow outputted from the regenerated air outlet 3012 into the condenser 401 for condensation to form a low-temperature dry airflow, and discharging the low-temperature dry airflow to the atmosphere through the condenser air outlet 406 of the condensation module 40, so as to avoid adverse effects on the atmospheric temperature and humidity of the space where the laundry treatment apparatus is located. Alternatively, preferably, the condenser air outlet 406 of the condensation module 40 is communicated with the regenerated air inlet 3011 of the regeneration module 30, so that the low-temperature dry airflow generated by the condensation module 40 is delivered to the regeneration fan 301, and then enters the regeneration module 30 again for regeneration circulation.

In Fig. 1, a cooling water inlet 401-1, a cooling water outlet 401-2 and a condensed water outlet 401-3 of the condenser 401 are further shown. Among them, the cooling water inlet 401-1 is connected to an external cold water source, the cooling water outlet 401-2 is optionally communicated with the water outlet of the container, and the cooling water inlet 401-1 and the cooling water outlet 401-2 cooperate with each other to provide and discharge cooling water for condensation to a condenser pipeline. The condensed water outlet 401-3 is used for condensing the water in water vapor desorbed from the dehumidification turntable into liquid water and discharging the liquid water out of the condenser housing.

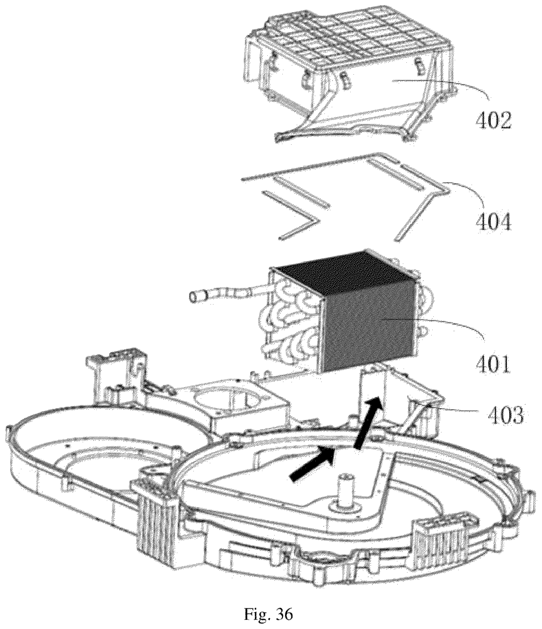

Fig. 36 shows a schematic diagram of a housing of the condensation module of the drying device of the present application.

As shown in Fig. 36, the condensation module includes a condenser 401, an upper condenser housing 402, a lower condenser housing 403, and preferably, further includes a sealing member 404. Among them, the condenser is fit with the lower condenser housing 403 through a blocking rib and a limiting member. The upper condenser housing presses the sealing member 404 around the condenser downward to achieve a sealing effect. Optionally, one of the upper condenser housing 402 and the lower condenser housing 403 (for example, the lower condenser housing 403) is provided with a groove, and the other housing is provided with a protrusion. The sealing member 404 (for example, a sealing gasket) may be accommodated in the groove, so as to achieve sealing by pressing the protrusion into the groove.

In Fig. 36, the arrows show that the high-temperature and high-humidity airflow from the regeneration part (after being heated by the heater, the moisture is desorbed from the dehumidification turntable) flows from a space between a lower surface of the dehumidification turntable and the first turntable housing for dehumidification to the condenser housing along the arrows, so as to be condensed to remove water.

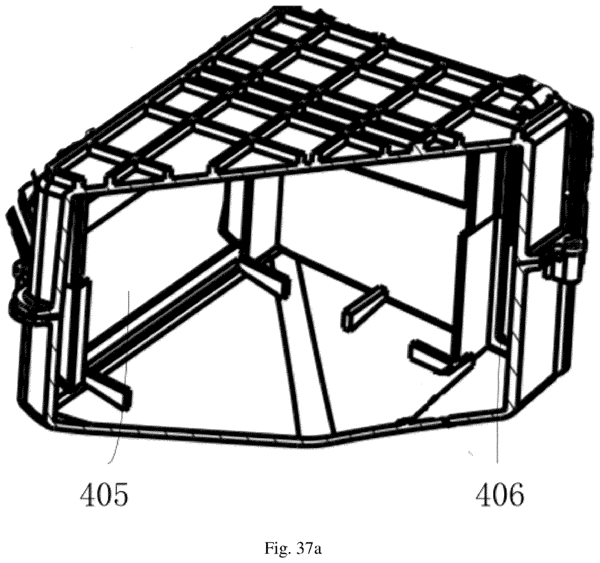

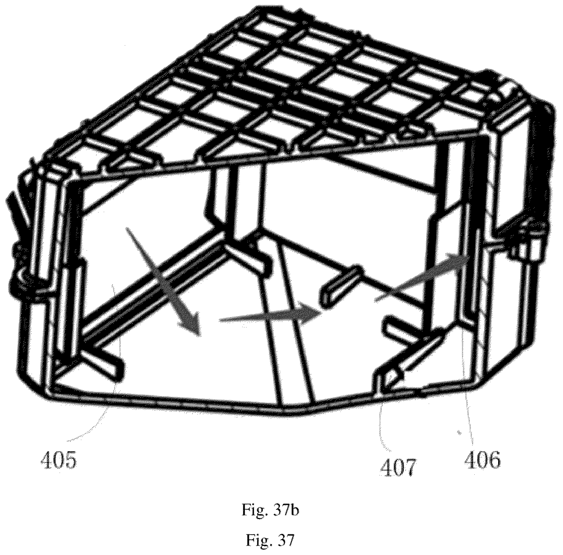

Fig. 37 shows a schematic diagram of a condenser spoiler in a preferred embodiment, where Fig. 37a shows a condenser housing structure without the spoiler, and Fig. 37b shows a condenser housing structure with the spoiler.

Referring to Fig. 37a, in the condenser housing without the spoiler, an airflow direction of the condensation circulation is that: the high-temperature and high-humidity air enters a condensation region where the condenser 401 is located from the condenser air inlet 405, turns into dry air after condensation and dehumidification, and flows out of the condenser from the condenser air outlet 406. In the case of no spoiler, a part of humid air will flow directly from the bottom of the condenser to the condenser air outlet 406 and does not pass through the condenser 401, resulting in that this part of humid air cannot be condensed, and the condensation and drying effect is not good.

In order to solve this problem, referring to Fig. 37b, one or more spoilers 407, such as baffles or protrusions, are arranged within the condenser housing (upper housing and/or lower housing) along a traveling direction of the condensation air. Any member shape that can change the traveling direction of the condensation air can be used for disturbing the humid airflow flowing through the condenser, so as to make the humid airflow be in full contact with the condenser and prevent the humid air from directly flowing out of the condensation module without passing through the condenser. In an embodiment of the present application, the spoiler 407 may also be arranged on a side or both sides of the traveling direction of the condensation air.

In another optional embodiment of the present application, in addition to arranging the condensation module 40 downstream of the regeneration circulation, a pre-condensation module may also be arranged between the air outlet of the container and the dehumidification turntable (for example, in the air inlet channel 102), so as to primarily condense the humid and hot airflow in relatively higher temperature, reduce the water content, and then perform moisture absorption treatment secondly after entering the dehumidification turntable.

Optionally, the pre-condensation module may be formed as an independent condensation module, and a condenser air inlet and a condenser air outlet of the pre-condensation module are respectively communicated with the air outlet of the container and the air inlet of the circulation fan.

In another embodiment, the pre-condensation module may be formed as a structure of a condensation sleeve, and the condensation sleeve is sleeved on the air outlet pipeline of the container, so that a waterflow space is formed between an outer wall of the air outlet pipeline of the container and an inner wall of the condensation sleeve. The outer wall of the air outlet pipeline of the container is slowly sprayed with water through the condensation nozzle, so as to be kept in a continuous low temperature, thus condensing the humid and hot air flowing through the pipeline into water. The cooling water in the condensation sleeve may flow into the outer tub of the container or a water outlet pipeline of the washing machine.

In another embodiment, the drying device may be selectively in fluid communication with any one of the containers through a switching mechanism. The switching mechanism may be in the form of a valve, an electromagnetic valve, etc. The switching mechanism is arranged on a pipeline communicating the drying device with the container.

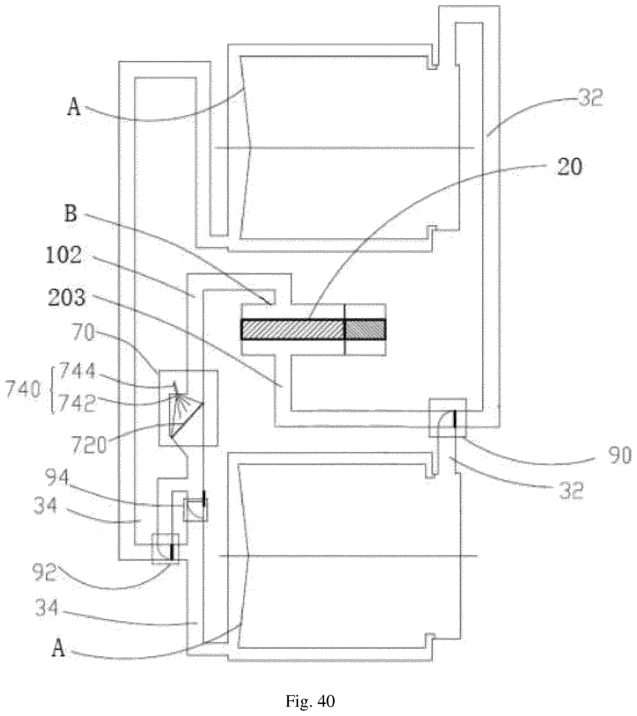

Specifically, the drying device may be selectively in fluid communication with any one of the containers through the switching mechanism. In the present embodiment, the switching mechanism includes a first switching mechanism 90 arranged at the joint between the air outlet channel 203 of the drying device and the air inlet passage 32 of the container, and second switching mechanisms 92 and 94 arranged on the air outlet passage 34 of the container. As required, the first switching mechanism 90 and the second switching mechanism 92 may respectively communicate one of the containers with the air outlet channel 203 and the air inlet channel 102 of the drying device, and cut off the connection between other containers and the air outlet channel 203 and the air inlet channel 102 of the drying device. The first switching mechanism 90/the second switching mechanisms 92 and 94 may be arranged at the joint between the air outlet channel 203/the air inlet channel 102 of the drying device and the air inlet passage 32/the air outlet passage 34 of the container. As an alternative, the first switching mechanism 90/ the second switching mechanism 92 may be arranged to be more than one, and may be respectively arranged within the air inlet passage 32/air outlet passage 34 of each container. Fig. 40 shows a case that two second switching mechanisms 92 and 94 are arranged. As required, the switching mechanism in the air inlet passage 32/the air outlet passage 34 of one of the containers may be selected to be turned on, and the switching mechanisms in the air inlet passages 32/the air outlet passages 34 of other containers are turned off, so that one of the containers is in fluid communication with the drying device and the fluid communication between other containers and the drying device is cut off.

In some embodiments, the filtering mechanism 70 is used for filtering the airflow discharged from the container before entering the drying device, so as to prevent foreign matters such as flying fluffs discharged from the container from entering the drying device, specifically, prevent affecting moisture absorption and moisture removal effects of the dehumidification turntable 200 caused by the foreign matters such as flying fluffs discharged from the container entering the inside of the dehumidification turntable 200 or covering the surface of the dehumidification turntable 200.

In some embodiments, the filtering mechanism 70 is arranged within the air inlet channel 102 of the drying device, that is, between the second switching mechanism and the drying device (specifically the circulation module 10). It is understandable that the filtering mechanism 70 may also be arranged on the air outlet passage 34 of the container, and the second switching mechanism may be located downstream of the filtering mechanism 70 along an airflow direction (that is, along the airflow direction, the filtering mechanism 70 is located between the second switching mechanism and the container, or the second switching mechanism is located between the filtering mechanism 70 and the drying device); or, the second switching mechanism may be located upstream of the filtering mechanism 70 along the airflow direction (that is, along the airflow direction, the second switching mechanism is located between the filtering mechanism 70 and the container, or the filtering mechanism 70 is located between the second switching mechanism and the drying device). In an embodiment, there may be one or more filtering mechanisms 70. If there is one filtering mechanism, the filtering mechanism is arranged on the air inlet channel 102 of the drying device. If there are a plurality of filtering mechanisms, the filtering mechanisms may be arranged on the air outlet channels 34 of a plurality of containers.

The filtering mechanism 70 may include a filter 720 and a filter self-cleaning device; or, the filtering mechanism 70 is a detachable filter 720 and a mounting bracket. When the filter 720 is detachable, the user can manually clean the filter 720 according to sensing data of a sensor, and of course, may also clean the filter after the operation is completed every time, or irregularly clean the filter. The specific cleaning manner may be washing, wiping or the like after the filter 720 is manually detached.

The specific form of the filter 720 may be, but not limited to, a filter screen, and a mesh number of the filter screen may be set as required. The number of the filter 720 is not limited; for example, one-stage filtering may be adopted, in which the filter 720 is arranged on the air outlet passages 34 of the container or the air inlet channel 102 of the drying device; or two-stage or multi-stage filtering may also be adopted, in which the filters 720 are arranged both on the air outlet passages 34 of the container and the air inlet channel 102 of the drying device to enhance a filtering effect.

The filter self-cleaning device is used for automatically cleaning the filter 720 to ensure a filtering function of the filter 720. The cleaning manner may be a liquid spraying manner, a vibration manner, a blowing manner or a scraping manner. For example, the filter self-cleaning device includes: a spraying mechanism 740 for spraying on the filter 720; a vibrating mechanism for driving the filter 720 to vibrate (for example, a vibrating motor is used for driving the filter screen to vibrate); a blowing mechanism for blowing the filter 720 (for example, the circulation fan 101 of the circulation module 10 may rotate reversely to generate a reverse airflow, that is, a direction of an airflow flowing through the filter 720 during cleaning is opposite to a direction of an airflow flowing through the filter 720 during drying; of course, a fan for reversely blowing the filter 720 may also be additionally specially arranged); or a scraping mechanism for scraping the filter 720, such as a scraper, where the scraper may be a manual scraper and may also be an electric scraper. When the filter 720 is detected to be blocked to a certain extent, the control system controls the electric scraper to scrape along an adsorption surface of the filter 720 according to a sensor signal, so as to clean the impurities such as fluffs adsorbed on the filter 720. As required, the controller of the laundry treatment apparatus can control the filter self-cleaning device to actively clean the filter 720.

A detailed description is made by taking the liquid spraying manner as an example. The spraying mechanism 740 includes a nozzle 742 and a water supply system 744 for supplying water to the nozzle. The nozzle 742 is directly opposite to the filter 720. The water supply system 744 is connected to a water inlet path (not shown) of the laundry treatment apparatus through a switch such as a valve (not shown), and the switch may be controlled to be turned on or off by the controller of the laundry treatment apparatus. Preferably, the nozzle 742 of the spraying mechanism 740 is arranged on a side of the filter 720 close to the drying device (that is, the side away from the air outlet of the container), and the foreign matters such as fluffs discharged from the container are usually adsorbed on the side of the filter 720 away from the drying device (that is, the side close to the air outlet of the container). In this way, a direction pf the fluid, such as a waterflow, sprayed out of the spraying mechanism 740 and flowing through the filter 720, is opposite to a direction of the airflow discharged from the container and flowing through the filter 720. In this way, it is easy for the fluid sprayed out of the spraying mechanism 740 to enable the fluffs adsorbed on the filter 720 to be separated from the filter 720 and enter a drainage channel of the laundry treatment apparatus together with the waterflow to be discharged from the laundry treatment apparatus. For example, when the filter 720, such as the filter screen, is obliquely arranged within the air outlet channel or the air inlet channel 102 of the container, the nozzle 742 of the spraying mechanism 740 is arranged on the side of the filter screen close to the drying device and located at a position above a middle line of the filter screen, so that the liquid sprayed out of the nozzle 744 can cover the whole filter screen as much as possible, thus effectively cleaning the filter screen. It can be understood that the filter screen may also be arranged horizontally, vertically, partially inclined and partially vertical, partially horizontal and partially inclined, etc. A spraying direction of the nozzle 742 is set to be capable of spraying the entire area of the filter 720 as thoroughly as possible when the self-cleaning process is started.

When the liquid spraying manner is adopted, the filter 720 and the filter self-cleaning device may be arranged within the air inlet channel 102 of the dehumidification channel. The fluid after cleaning may flow from the air inlet channel 102 of the moisture absorption channel via the air outlet passage 34 of one of the containers in fluid communication with the air inlet channel 102 (for example, when the containers are stacked vertically, during or after cleaning, the container located in the lower part is communicated with the air inlet channel 102 of the moisture absorption channel, while the communication between the container located in the upper part and the air inlet channel 102 of the moisture absorption channel is cut off by the second switching mechanisms 92 and 94) to a drainage channel of the container and is then discharged out of the laundry treatment apparatus. For example, when the laundry in the upper container in Fig. 40 needs to be dried, the controller may control the first switching mechanism 90 to communicate the air outlet channel 203 of the drying device with the air inlet channel 32 of the upper container and cut off the communication between the air outlet channel 203 of the drying device and the air inlet channel 32 of the lower container; meanwhile, the controller may control the second switching mechanism 92 located in the air outlet passage 34 of the upper container to communicate the air inlet channel 102 of the drying device with the air outlet passage 34 of the upper container and may control the second switching mechanism 94 located in the air outlet passage 34 of the lower container to cut off the communication between the air inlet channel 102 of the drying device and the air outlet passage 34 of the lower container. When the laundry in the lower container in Fig. 40 needs to be dried, the controller may control the first switching mechanism 90 to communicate the air outlet channel 203 of the drying device with the air inlet channel 32 of the lower container, and cut off the communication between the air outlet channel 203 of the drying device and the air inlet channel 32 of the upper container; meanwhile, the controller may control the second switching mechanism 94 located in the air outlet passage 34 of the lower container to communicate the air inlet channel 102 of the drying device with the air outlet passage 34 of the lower container, and control the second switching mechanism 92 located in the air outlet passage 34 of the upper container to cut off the communication between the air inlet channel 102 of the drying device and the air outlet passage 34 of the upper container. When the filter 720 needs to be cleaned after drying, the controller controls the second switching mechanism 92 located in the air outlet passage 34 of the upper container to cut off the communication between the air inlet channel 102 of the drying device and the air outlet passage 34 of the upper container, and controls the second switching mechanism 94 located in the air outlet passage 34 of the lower container to communicate the air inlet channel 102 of the drying device with the air outlet passage 34 of the lower container; and the liquid after cleaning may be discharged through the air outlet passage 34 of the lower container via the drainage channel of the lower container. The air outlet passage 34 of the lower container and the drainage channel of the lower container may be communicated or disconnected with each other by a valve.

That is, in the process of drying the laundry in the upper container, the second switching mechanism 92 communicates the air outlet passage 34 of the upper container with the air inlet channel 102 of the drying device, while the second switching mechanism 92 cuts off the communication between the air outlet passage 34 of the lower container and the air inlet channel 102 of the drying device. When spray cleaning is performed on the filter 720, the second switching mechanism 94 is controlled to be opened for a short time to discharge the spraying water to the lower container or the drainage channel. In the process of drying the laundry in the lower container, the second switching mechanism 92 always cuts off the communication between the air outlet passage 34 of the upper container and the air inlet channel 102 of the drying device, while the second switching mechanism 94 always communicates the air outlet passage 34 of the lower container with the air inlet channel 102 of the drying device, so that the airflow of the lower container can pass through the filter 720 and flow to the drying device, and the liquid sprayed on the filter 720 for cleaning flows to the lower container or the drainage channel in a direction opposite to the above airflow.

When the liquid spraying manner is adopted, the filter 720 and the filter self-cleaning device may also be arranged on the air outlet passage 34 of the container. For example, the filter 720 and the filter self-cleaning device may be arranged on the air outlet passage 34 of each container, and the liquid after cleaning may be discharged through the air outlet passage 34 of the respective container via the drainage channel of the container.

Understandably, the waterflow of the filter self-cleaning device may flow to a water storage tank or drainage pipeline of one of the containers through a separately arranged fluid pipeline, for example, the water storage tank or drainage pipeline of the lowermost container. At this time, only a second switching mechanism is needed to be provided at the junction between the air outlet passage 34 of the upper container and the air outlet passage 34 of the lower container, and only the communication between the air outlet passages 34 of the upper and lower containers and an air inlet segment of the drying device needs to be switched.

A cleaning frequency may be set as required. For example, the filter 720 is cleaned once after each dehumidification treatment on the laundry. The filter 720 may also be cleaned after many times of dehumidification treatment on the laundry. Parameters such as spraying time and spraying water speed of each cleaning treatment may be set as required, and the spraying time and the spraying water speed of each cleaning treatment may be fixed or adjusted as required. For example, if the filter 720 is cleaned once after each dehumidification treatment on the laundry, the spraying time may be relatively shorter and the spraying water speed may be relatively lower. If the filter 720 is cleaned once after many times of dehumidification treatment of the laundry, the spraying time may be relatively longer and the spraying water speed may be relatively higher. Alternatively, a sensor may be arranged on the filter 720. When it is sensed that the filter 720 is blocked seriously, for example, when an air pressure sensor on the passage detects that an air pressure on a pipeline drops to a certain threshold, it is indicated that the filter is blocked seriously, and the controller of the laundry treatment apparatus may increase the spraying time and/or the spraying water speed of the spraying mechanism, thus increasing the cleaning strength.

An embodiment of the present application further provides a method for using the laundry treatment apparatus. The method includes the following steps.

In a dehumidification step, the drying device is alternatively communicated with one of the containers and dehumidifies the laundry in the container, where the airflow flowing out of the container enters the drying device after passing through the filtering mechanism 70.

In a cleaning step, the filter self-cleaning device cleans the filter.

In some embodiments, the dehumidification step further includes: controlling a temperature of the airflow entering the container after being discharged from the drying device to be lower than a predetermined temperature. Specifically, a temperature sensor may be arranged nearby the air inlet of the container. When the sensor senses that the temperature of the airflow entering the air inlet of the container is higher than the predetermined temperature, for example, 75□, the controller will control a heating temperature of the heater, for example, reduce the heating temperature of the heater, so as to reduce a temperature of the airflow entering a moisture removal region, and correspondingly reduce a temperature of the moisture absorption and moisture removal member, thus reducing the temperature of the airflow flowing out of the moisture absorption region and entering the container.

The filter self-cleaning device can clean the filter by means of spraying, blowing, vibrating, scraping, etc.

The laundry treatment apparatus according to the embodiments of the present application at least has the following characteristics.

A plurality of containers shares a same drying device, so as to simplify the structure of the laundry treatment apparatus and reduce an overall height or width of the laundry treatment apparatus, thus reducing the volume and cost of the whole apparatus. The use of the filter can avoid affecting the dehumidification effect caused by foreign matters such as flying fluffs entering the drying device or covering the surface of the drying device. The filtering assembly includes the filter self-cleaning device, which is used for automatically cleaning the filter to ensure that the filtering function of the filter does not decrease with the extension of use time, thus providing strong protection for the drying device and prolonging the service life of the drying device.

It should be understood that the above specific embodiments of the present application are only used for exemplarily illustrating or explaining the principles of the present application, and do not constitute limitations on the present application. Therefore, any modifications, equivalent substitutions, improvements or the like made without departing from the spirit and scope of the present application should be included in the protection scope of the present application. Furthermore, the appended claims of the present application are intended to cover all changes and modification examples falling within the scope and boundary of the appended claims, or equivalent forms of the scope and boundary.

## Claims

1. A laundry treatment apparatus, comprising:
at least two containers (A) arranged in parallel, wherein a container (A) is used for accommodating laundry; and
a drying device (B), alternatively communicated with the container (A) to form a circulation path, wherein the drying device (B) is used for dehumidifying a humid airflow from the container (A) into a dry airflow, and the dry airflow enters the container (A) to dry the laundry.

2. The laundry treatment apparatus according to claim 1, wherein the drying device is arranged above or below at least one container, and a plane where the drying device is located is parallel to a rotation axis of the container.

3. The laundry treatment apparatus according to claim 1 or 2, wherein the drying device comprises:
a circulation module (10), communicated with the container and used for providing power for circulation flowing of the humid airflow in the container;
a dehumidification module (20), located downstream or upstream of the circulation module and communicated with the container, wherein the dehumidification module (20) is used for adsorbing moisture from the humid airflow in the container and outputting the generated dry airflow into the container; and
a regeneration module (30), communicated with the dehumidification module (20) and used for outputting a dry regenerated airflow to the dehumidification module (20) to desorb the moisture from at least part of the dehumidification module (20) to restore a dehumidification capability of the dehumidification module (20),
wherein the circulation module (10), the dehumidification module (20) and the regeneration module (30) of the drying device are substantially within a plane.

4. The laundry treatment apparatus according to claim 3, wherein the drying device further comprises:
an air inlet channel (102), communicated with the circulation module (10) and the container, and used for a humid circulation airflow from the container to enter the circulation module (10); and
an air outlet channel (203), arranged to communicate the dehumidification module (20) with the container, and used as a channel for a dry circulation airflow after moisture desorption to enter the container.

5. The laundry treatment apparatus according to claim 4, wherein each of the containers comprises an air inlet passage (32) and an air outlet passage (34);
each air inlet passage (32) is communicated with the air outlet channel (203), so that the dry circulation airflow after moisture desorption enters the container; and
each air outlet passage (34) is communicated with the air inlet channel (102), so that the humid circulation airflow in the container enters the circulation module (10).

6. The laundry treatment apparatus according to claim 5, further comprising:
a switching mechanism, used for controlling the drying device to be communicated with any one of the containers;
wherein the switching mechanism is arranged on a pipeline of the drying device communicated with the container.

7. The laundry treatment apparatus according to claim 6, wherein,
the switching mechanism comprises a first switching mechanism (90) and a second switching mechanism (92, 94);
wherein the first switching mechanism (90) is used for controlling connection or disconnection between each air inlet passage (32) and the air outlet channel (203); the first switching mechanism (90) is arranged at a joint between each air inlet passage (32) and the air outlet channel (203); or
a number of the first switching mechanism (90) is more than one, and more than one first switching mechanism (90) is respectively arranged within the air inlet passage (32) of the container;
the second switching mechanism (92, 94) is used for controlling connection or disconnection between each air outlet passage (34) and the air inlet channel (102); and the second switching mechanism (92, 94) is arranged at a joint between each air outlet passage (34) and the air inlet channel (102); or
a number of the second switching mechanism (92, 94) is more than one, and more than one second switching mechanism (92, 94) is respectively arranged within the air outlet passages of the container.

8. The laundry treatment apparatus according to claim 3, wherein the drying device further comprises:
a condensation module (40), communicated with a regenerated air outlet of the regeneration module (30) and used for condensing the regenerated airflow outputted by the regeneration module (30) to form a low-temperature dry airflow;
wherein an air outlet of the condensation module (40) is communicated with a regenerated air inlet (3011) of the regeneration module (30).

9. The laundry treatment apparatus according to claim 8, wherein the drying device is provided with a packaging housing (50), comprising:
a first housing, comprising a first turntable housing (501) for housing the dehumidification module (20), a first circulation housing (502) for housing the circulation module (10), a first condensation housing (503) for housing the condensation module (40), and a regeneration housing (504) for housing the regeneration module (30); and
a second housing, comprising a second turntable housing (505) for housing the dehumidification module (20), a second circulation housing (506) for housing the circulation module (10) and a second condensation housing (507) for housing the condensation module (40);
wherein the first turntable housing (501), the first circulation housing (502) and the first condensation housing (503) are at least integrally formed as the first housing, or separately formed as a plurality of discrete first housing components; and
the second turntable housing (505), the second circulation housing (506) and the second condensation housing (507) are at least respectively formed as a plurality of discrete second housing components.

10. The laundry treatment apparatus according to claim 9, further comprising:
a frame (80), wherein the container is located within the frame (80) and flexibly connected to the frame (80);
wherein the drying device is located on top of the frame (80); and
at least one mounting part (509) is arranged on the first housing, and the mounting part (509) is connected to the top of the frame (80) to fix a position of the drying device.

11. The laundry treatment apparatus according to claim 9, wherein,
the air inlet passage (32) is arranged on a sidewall of the container, and the air inlet passage (32) extends upward and is flexibly connected to the air outlet channel (203); and
the air outlet passage (34) is arranged on a backwall of the container, the air outlet passage (34) is close to a left side or a right side of the container, and the air outlet passage (34) extends upward and is flexibly connected to the air inlet channel (102).

12. The laundry treatment apparatus according to claim 3, wherein rotation axes of at least two of the circulation module (10), the dehumidification module (20) and the regeneration module (30) within the drying device are parallel to each other and substantially perpendicular to a rotation axis of the container.

13. The laundry treatment apparatus according to claim 3, wherein,
a rotation axis of the circulation module (10) and a rotation axis of the dehumidification module (20) are arranged to be in different planes from and perpendicular to a rotation axis of the container and distributed on either side of the rotation axis of the container; and
the regeneration module (30) is arranged on a side of the circulation module (10), and the regeneration module (30) and the dehumidification module (20) are respectively located on either side of the rotation axis of the container.

14. The laundry treatment apparatus according to claim 3, wherein, when a plane where the drying device is located is horizontally arranged above the container, the air inlet channel (102) is arranged on a rear left side or a rear right side of the container, and the circulation module (10) communicated with the air inlet channel (102) is also correspondingly arranged at an upper part of the rear left side or the rear right side of the container.

15. The laundry treatment apparatus according to claim 3, wherein, when a plane where the drying device is located is horizontally arranged below the container, the air inlet channel (102) is arranged to extend along a bottom part, a back part and an upper part of the laundry treatment apparatus in sequence, and communicate an air outlet of the container with an air inlet of a circulation fan 101.

16. The laundry treatment apparatus according to claim 3, wherein, when a plane where the drying device is located is horizontally arranged below the container, the air outlet channel (203) is arranged to extend along a bottom part, a back part and an upper part of the laundry treatment apparatus, and communicate an air outlet of the dehumidification module (20) with an air inlet of the container.

17. The laundry treatment apparatus according to claim 1, wherein the drying device is arranged behind the container, and a plane where the drying device is located is perpendicular to a rotation axis of the container.

18. The laundry treatment apparatus according to claim 17, wherein,
a rotation axis of the circulation module (10) and a rotation axis of the dehumidification module (20) are parallel to the rotation axis of the container and distributed on either side of the rotation axis of the container; and
the regeneration module (30) is arranged on a side of the circulation module (10), and the regeneration module (30) and the dehumidification module (20) are respectively located on either side of the rotation axis of the container.

19. The laundry treatment apparatus according to claim 17 or 18, wherein,
the drying device further comprises an air inlet channel (102); and the air inlet channel (102) is arranged to extend in a direction perpendicular to the rotation axis of the container, communicate an air outlet of the container with an air inlet of the circulation module (10), and be used as a channel for the humid circulation airflow from the container to enter the circulation module (10).

20. The laundry treatment apparatus according to claim 17 or 18, wherein,
the drying device further comprises an air outlet channel (203); and the air outlet channel (203) is arranged to extend in a direction parallel to the rotation axis of the container and communicate an air outlet of the dehumidification module (20) with an air inlet of the container, and is used as a channel for the dry circulation airflow after dehumidification to enter the container.

21. The laundry treatment apparatus according to any one of claims 4 to 20, further comprising:
a filtering mechanism (70), comprising:
a filter (720), arranged on an air outlet passage of the container or within the air inlet channel (102) of the drying device; and
a filter self-cleaning device, used for cleaning the filter.

22. The laundry treatment apparatus according to claim 21, wherein,
the filter (720) and the filter self-cleaning device are arranged within the air inlet channel (102) of the drying device, and are located between the second switching mechanism and the circulation module.

23. The laundry treatment apparatus according to claim 21, wherein,
a number of the filter (720) and a number of the filter self-cleaning device are more than one, more than one filter (720) and more than one filter self-cleaning device are respectively arranged on the air outlet passage of the container and located upstream or downstream of the second switching mechanism.

24. The laundry treatment apparatus according to claim 21, wherein,
the filter self-cleaning device comprises a spraying mechanism (740) for spraying on the filter; and/or
the filter self-cleaning device comprises a vibration mechanism for driving the filter to vibrate; and/or
the filter self-cleaning device comprises a blowing mechanism for blowing the filter; and/or
the filter self-cleaning device comprises a scraping mechanism for scraping the filter.

25. The laundry treatment apparatus according to claim 24, wherein a direction of a fluid of the spraying mechanism flowing through the filter is opposite to a direction of an airflow flowing through the filter; or
the filter and the filter self-cleaning device are arranged within the air inlet channel (102) of the drying device and located between the second switching mechanism and the circulation module; the filter self-cleaning device comprises the spraying mechanism for spraying on the filter, and a fluid spraying direction of the spraying mechanism is a direction away from the circulation module.

26. The laundry treatment apparatus according to claim 24 or 25, wherein,
a nozzle (742) of the spraying mechanism is arranged above a center line of the filter; or
the nozzle (742) of the spraying mechanism is arranged on a side of an airflow outlet of the filter.

27. The laundry treatment apparatus according to claim 24 or 25, wherein the container comprises a first tub and a second tub, and the first tub and the second tub are both inner tubs of a washing machine; or
the first tub is an inner tub of a dryer and the second tub is an inner tub of a washing machine; or
the first tub is an inner tub of a washing machine and the second tub is an inner tub of a dryer.

28. The laundry treatment apparatus according to claim 27, wherein the drying device is located between the first tub and the second tub.
